# EUROPEAN PATENT SPECIFICATION

(11) **EP 4 246 957 B1**
(45) Date of publication and mention of the grant of the patent: **26.08.2026**
(21) Application number: 21913818.7
(22) Date of filing: 09.12.2021
(51) Int. Cl.: H04N 23/63, H04N 1/00, G06F 9/445, H04N 21/414, H04N 21/4223, H04N 23/661, H04N 23/667, H04N 5/77

(54) **PHOTOGRAPHING METHOD, SYSTEM, AND ELECTRONIC DEVICE**
FOTOGRAFIEVERFAHREN, SYSTEM UND ELEKTRONISCHE VORRICHTUNG
PROCÉDÉ, SYSTÈME ET DISPOSITIF ÉLECTRONIQUE DE PHOTOGRAPHIE

(30) Priority: 29.12.2020 CN 202011608325
(43) Date of publication of application: 20.09.2023
(73) Proprietor: Huawei Technologies Co., Ltd., Shenzhen, Guangdong 518129 (CN)
(72) Inventor: LENG, Ye, Shenzhen, Guangdong 518129 (CN)
(74) Representative: Grünecker Patent- und Rechtsanwälte PartG mbB
(86) International application number: PCT/CN2021/136767
(87) International publication number: WO 2022/143077

(56) References cited:
- CN-A- 103 024 266
- CN-A- 104 427 228
- CN-A- 106 775 902
- CN-A- 112 004 076
- CN-B- 104 427 228
- US-A1- 2012 281 101
- US-A1- 2016 077 422

## Description

This application claims priority to Chinese Patent Application No. 202011608325.X, filed with the China National Intellectual Property Administration on December 29, 2020 and entitled "SHOOTING METHOD AND SYSTEM, AND ELECTRONIC DEVICE.

### TECHNICAL FIELD

This application relates to the field of electronic devices, and in particular, to a shooting method and system, and an electronic device.

### BACKGROUND

Currently, a camera is installed in an electronic device such as a mobile phone, and the electronic device may implement a shooting function such as photographing and video recording through the camera. For example, the electronic device may enable the camera of the electronic device to collect image data. The image data collected by the camera may be referred to as original image data. If the electronic device enables a soft focus function, a beauty function, a filter function, or the like during shooting, the electronic device may further perform image processing on the original image data by using a corresponding image processing algorithm, and output target image data obtained after the image processing.

When a user or a family has a plurality of electronic devices having a shooting function, the user may need to switch a shooting function of an electronic device 1 to a distributed shooting scenario implemented in an electronic device 2. For example, when the user makes a video call by using the mobile phone, the mobile phone may interact with a television, and performs shooting by using a camera of the television. In this distributed shooting scenario, shooting capabilities of different electronic devices may be different. For example, an image processing algorithm supported by the electronic device 1 is different from an image processing algorithm supported by the electronic device 2. In this case, how to switch a shooting function of one electronic device to another electronic device to achieve a good shooting effect becomes an urgent problem to be resolved.

CN104427228A discloses a collaborative shooting system and shooting method involving two or more photographing apparatuses suitable for cooperative photographing and a communication unit to implement data interaction with other photographing devices such as to control the photographing of the photographing object by the photographing unit to obtain a photographed image, and is further adapted to perform an image on the photographed image generated by the photographing unit.

CN106775902A discloses an image processing method for mobile terminal involving controlling a camera to collect a target image by invoking an application programming interface to carry out image processing operation in the camera to obtain the target image and display it on the mobile terminal.

US2012281101A1 discloses an electronic device including a communication unit that performs communication with an external device; and a control unit that issues a command to the external device via the communication unit, on the basis of at least one of capacity of the external device, and capacity of the electronic device.

### SUMMARY

This application provides a shooting method and system, and an electronic device, to switch a shooting function of one electronic device to another electronic device in a distributed shooting scenario. This implements a good shooting effect and improves user experience.

To achieve the foregoing objective, this application uses the technical solutions in appended claims 1-12.

### BRIEF DESCRIPTION OF DRAWINGS

FIG. 1 is a schematic diagram of an architecture of a distributed shooting system according to an embodiment of this application;
FIG. 2 is a schematic diagram 1 of an application scenario of a shooting method according to an embodiment of this application;
FIG. 3 is a schematic diagram 2 of an application scenario of a shooting method according to an embodiment of this application;
FIG. 4 is a schematic interaction diagram of a shooting method according to an embodiment of this application;
FIG. 5 is a schematic diagram 1 of a structure of an electronic device according to an embodiment of this application;
FIG. 6 is a schematic diagram 3 of an application scenario of a shooting method according to an embodiment of this application;
FIG. 7 is a schematic diagram 4 of an application scenario of a shooting method according to an embodiment of this application;
FIG. 8 is a schematic diagram 5 of an application scenario of a shooting method according to an embodiment of this application;
FIG. 9 is a schematic diagram 6 of an application scenario of a shooting method according to an embodiment of this application;
FIG. 10 is a schematic diagram 7 of an application scenario of a shooting method according to an embodiment of this application;
FIG. 11 is a schematic diagram 8 of an application scenario of a shooting method according to an embodiment of this application;
FIG. 12 is a schematic diagram 9 of an application scenario of a shooting method according to an embodiment of this application;
FIG. 13 is a schematic diagram 10 of an application scenario of a shooting method according to an embodiment of this application;
FIG. 14 is a schematic diagram 11 of an application scenario of a shooting method according to an embodiment of this application;
FIG. 15 is a schematic diagram 12 of an application scenario of a shooting method according to an embodiment of this application;
FIG. 16 is a schematic diagram 13 of an application scenario of a shooting method according to an embodiment of this application;
FIG. 17 is a schematic diagram 14 of an application scenario of a shooting method according to an embodiment of this application;
FIG. 18 is a schematic diagram 15 of an application scenario of a shooting method according to an embodiment of this application;
FIG. 19 is a schematic diagram 2 of a structure of an electronic device according to an embodiment of this application; and
FIG. 20 is a schematic diagram 3 of a structure of an electronic device according to an embodiment of this application.

### DESCRIPTION OF EMBODIMENTS

The following describes implementations of embodiments in detail with reference to the accompanying drawings.

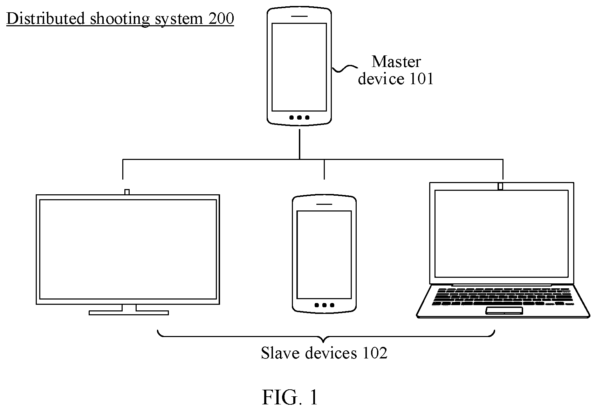

A shooting method provided in embodiments of this application may be applied to a distributed shooting system 200 shown in FIG. 1. As shown in FIG. 1, the distributed shooting system 200 may include a master device (master) 101 and N slave devices (slave) 102, where N is an integer greater than 0. The master device 101 may communicate with any slave device 102 in a wired manner, or in a wireless manner.

For example, a wired connection may be established between the master device 101 and the slave device 102 by using a universal serial bus (universal serial bus, USB). For another example, a wireless connection may be established between the master device 101 and the slave device 102 through a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth, wireless fidelity (wireless fidelity, Wi-Fi), NFC, voice over internet protocol (voice over Internet protocol, VoIP), or a communication protocol that supports a network slice architecture.

One or more cameras may be arranged in both the master device 101 and the slave device 102. The master device 101 may collect image data by using a camera on the slave device 102, so that shooting functions such as photographing and video recording of the master device 101 are distributed to one or more slave devices 102 for implementation. This implements a cross-device distributed shooting function.

For example, the master device 101 (or the slave device 102) may be specifically an electronic device having a shooting function, such as a mobile phone, a tablet computer, a television (which may also be referred to as a smart television, a smart screen, or a large-screen device), a notebook computer, an ultra-mobile personal computer (Ultra-mobile Personal Computer, UMPC), a handheld computer, a netbook, a personal digital assistant (Personal Digital Assistant, PDA), a wearable electronic device (for example, a smart watch, smart glasses, a smart helmet, or a smart band), a vehicle-mounted device, or a virtual reality device. This is not limited in embodiments of this application.

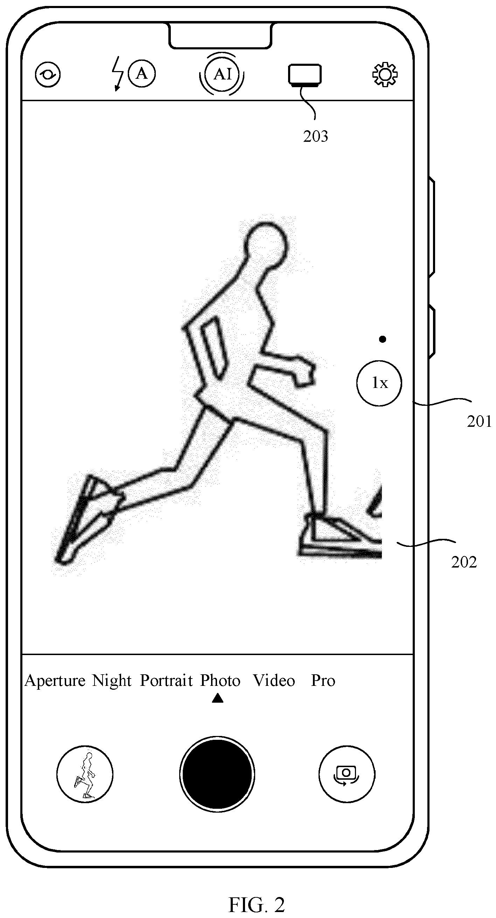

For example, an example in which the mobile phone is used as a master device 101 is used. A camera application used to implement a shooting function may be installed in the mobile phone. As shown in FIG. 2, after it is detected that a user starts a camera application, the mobile phone may enable a camera of the mobile phone to collect image data, and display the image data in a preview box 202 of a preview interface 201 in real time.

Generally, after obtaining the image data (which may be referred to as original image data) collected by the camera, the mobile phone may perform one or more image processing tasks on the original image data. For example, the mobile phone may perform an image processing task 1 on the original image data by using a preset exposure algorithm, to adjust an exposure degree of the original image data. For another example, the mobile phone may perform an image processing task 2 on the original image data by using a preset face detection algorithm, to recognize a face image in the original image data. For another example, the mobile phone may perform an image processing task 3 on the original image data by using a preset beauty algorithm, to perform beauty processing on a face image in the original image data.

Certainly, the mobile phone may further perform, on the original image data, an image processing task of a related function such as image stabilization, focusing, soft focusing, blurring, a filter, an AR special effect, smile detection, skin color adjustment, or scene recognition. These image processing tasks may be performed by the mobile phone in response to a setting of the user, or may be automatically performed by the mobile phone by default. This is not limited in embodiments of this application.

For example, if the user enables a beauty function in the camera application, after obtaining the original image data, the mobile phone may respond to an operation of enabling the beauty function by the user, to perform an image processing task corresponding to the beauty function. For another example, after the mobile phone obtains the original image data, although the user does not input an operation of adjusting a focal length, the mobile phone may still automatically perform an image processing task of a focusing function.

In some scenarios, the mobile phone may need to perform a plurality of image processing tasks. For example, an example in which the mobile phone needs to perform the image processing task 1 and the image processing task 2 is used. The mobile phone may first perform the image processing task 1 on the obtained original image data, to obtain processed first image data. In this way, the mobile phone may perform the image processing task 2 on the first image data, to obtain processed second image data. Subsequently, the mobile phone may display the second image data in the preview box 202 of the preview interface 201, to present, to the user, a shooting picture obtained after image processing.

In embodiments of this application, the mobile phone may set a button 203 in the preview interface 201 of the camera application. When the user wants to switch a shooting function (which may also be referred to as a camera function) of the mobile phone to another device for implementation, the user may tap the switching button 203 to query one or more electronic devices that may currently collect image data.

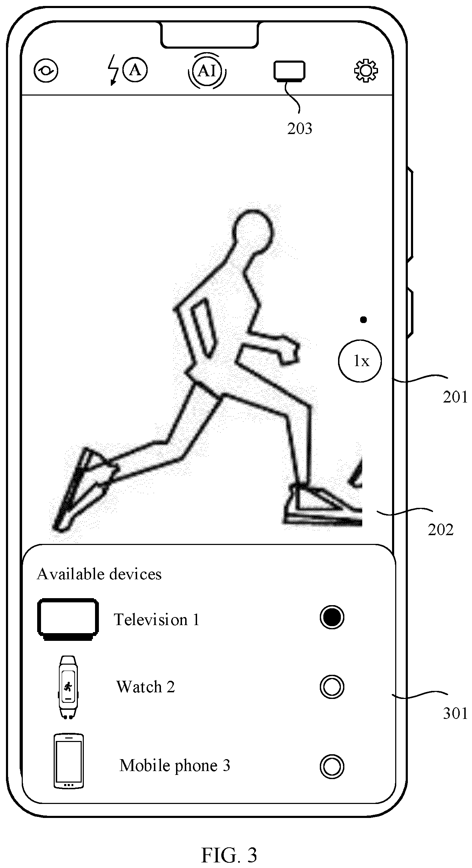

For example, after the mobile phone detects that the user taps the switching button 203, as shown in FIG. 3, the mobile phone may display, in a dialog box 301, one or more candidate devices that are currently found by the mobile phone and that may collect image data. For example, a server may record whether each electronic device has a shooting function. In this case, the mobile phone may query, in the server, an electronic device that has the shooting function and that is logged in to by using a same account (for example, a Huawei account) as the mobile phone. Further, the mobile phone may display, in the dialog box 301, the queried electronic device as a candidate device.

Alternatively, the mobile phone may search for an electronic device that is located in a same Wi-Fi network as the mobile phone. Further, the mobile phone may send a query request to each electronic device in the same Wi-Fi network, and trigger the electronic device that receives the query request to send a response message to the mobile phone. The response message may indicate whether the electronic device has the shooting function. In this case, the mobile phone may determine, based on the received response message, the electronic device having the shooting function in the current Wi-Fi network. Further, the mobile phone may display the electronic device having the shooting function as the candidate device in the dialog box 301.

Alternatively, an application used to manage a smart home device at home (such as a television, an air conditioner, a sound box, or a refrigerator) may be installed in the mobile phone. Using a smart home application as an example, the user may add one or more smart home devices to the smart home application, so that the smart home device added by the user is associated with the mobile phone. For example, a two-dimensional code including device information such as a device identifier may be set on the smart home device. After scanning the two-dimensional code by using the smart home application of the mobile phone, the user may add a corresponding smart home device to the smart home application, to establish an association relationship between the smart home device and the mobile phone. In embodiments of this application, when one or more smart home devices added to the smart home application go online, for example, when the mobile phone detects a Wi-Fi signal sent by the added smart home device, the mobile phone may display the smart home device as the candidate device in the dialog box 301, and prompt the user to select the corresponding smart home device to complete the shooting function of the mobile phone.

Similar to processing the original image data by the mobile phone, each candidate device in the dialog box 301 may also perform, based on the foregoing method, one or more image processing tasks on the original image data collected by the camera. A difference lies in that different electronic devices may have different image processing capabilities. In other words, different electronic devices may support different image processing tasks. For example, a television 1 may support an image processing task with a zoom function, but does not support an image processing task with a beauty function.

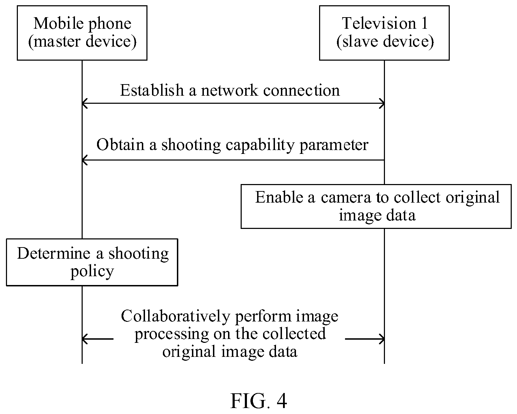

Still as shown in FIG. 3, an example in which candidate devices found by the mobile phone include the television 1, a watch 2, and a mobile phone 3 is used. The user may select, from the television 1, the watch 2, and the mobile phone 3, a device to which the shooting function of the mobile phone is specifically switched for implementation. For example, if it is detected that the user selects the television 1, as shown in FIG. 4, the mobile phone may use the television 1 as a slave device for switching a shooting function of the mobile phone, and establish a network connection to the television 1. For example, the mobile phone may establish a Wi-Fi connection to the television 1 through a router, or the mobile phone may directly establish a Wi-Fi P2P connection to the television 1, or the mobile phone may directly establish a mobile network connection to the television 1. The mobile network includes but is not limited to a mobile network that supports 2G, 3G, 4G, 5G, and a subsequent standard protocol.

Further, still as shown in FIG. 4, the mobile phone may obtain a shooting capability parameter of the television 1 from the television 1, where the shooting capability parameter indicates one or more image processing tasks supported by the television 1. For example, the shooting capability parameter of the television 1 may specifically include an algorithm corresponding to an image processing task supported by the television 1. For example, an image processing task A corresponds to an algorithm 1 of a beauty function, and an image processing task B corresponds to an algorithm 2 of a face detection function. Alternatively, the shooting capability parameter of the television 1 may further include a quantity of cameras in the television 1, an FOV (field of view) of each camera, an aperture size, a resolution, and the like. In this way, the mobile phone may determine, based on the shooting capability parameter of the television 1, a specific image processing task supported by the television 1.

Still as shown in FIG. 4, after the mobile phone obtains the shooting capability parameter of the television 1, the mobile phone may indicate the television 1 to enable a camera of the mobile phone to collect original image data. In addition, the mobile phone may determine, in real time based on the shooting capability parameter of the television 1, a shooting policy in a shooting process, and then perform related image processing on the collected original image data in collaboration with the television 1 based on the shooting policy.

For example, when a camera application in the mobile phone is in a preview mode, the mobile phone may determine that an image processing task 1 corresponding to a focusing function needs to be performed on the original image data. If the shooting capability parameter of the television 1 indicates that the television 1 does not support the image processing task 1, the mobile phone may set, in a shooting policy 1, that the mobile phone performs the image processing task 1 on the original image data. Further, the mobile phone may send a shooting instruction 1 to the television 1, where the shooting instruction 1 indicates the television 1 to send the collected original image data to the mobile phone for image processing. In this way, the television 1 may respond to the shooting instruction 1, and send, to the mobile phone, the original image data collected by the camera in real time. After receiving the original image data sent by the television, the mobile phone may perform the image processing task 1 on the original image data based on a shooting policy 1, to obtain processed image data 1. Subsequently, the mobile phone may display the image data 1 in a preview box 202 of a preview interface 201, to present a focused preview picture to a user.

In the foregoing embodiment, an example in which a camera application needs to perform the image processing task 1 on the original image data in a preview mode is used for description. In some embodiments, there may be a plurality of shooting modes of the mobile phone. For example, the shooting mode may include a shooting mode such as preview (which may also be referred to as a preview mode), photographing (which may also be referred to as a photographing mode), video recording (which may also be referred to as a video recording mode), portrait (which may also be referred to as a portrait mode), or slow-mo (which may also be referred to as a slow-mo mode). There may be a plurality of image processing tasks that need to be performed by the mobile phone on the original image data in different shooting modes. For example, in the portrait mode, the image processing task that needs to be performed by the mobile phone may include a plurality of image processing tasks such as exposure enhancement, beauty, and soft focusing. In addition, in a shooting mode, the user further manually sets a shooting option in a shooting process. For example, the shooting option may include beauty, a filter, focal length adjustment, or the like. The preview mode is still used as an example. If it is detected that the user enables a shooting option of beauty in the camera application, in addition to the image processing task 1, the mobile phone may further determine that an image processing task 2 corresponding to the beauty function needs to be performed on the original image data.

In this case, the mobile phone may determine a new shooting policy, for example, a shooting policy 2, with reference to the shooting capability parameter of the television 1. In the shooting policy 2, the mobile phone may allocate, based on a shooting capability of the television 1, the image processing task 1 and the image processing task 2 to the mobile phone and/or the television 1 to be performed. In this way, the mobile phone may send a new shooting instruction to the television 1 based on the shooting policy 2, so that the mobile phone may perform related image processing on the collected original image data in collaboration with the television 1 based on the shooting capability of the television 1.

In other words, in the distributed shooting scenario, a master device 101 (for example, the mobile phone) may determine, in real time with reference to a shooting capability of a slave device 102 (for example, the television 1), the shooting policy in a shooting process, and allocate, through the shooting policy, one or more image processing tasks that need to be performed to a corresponding electronic device to be performed. In this way, the master device 101 may switch a shooting function of the master device 101 to the slave device 102 for implementation based on an image processing capability of the slave device 102 during shooting, and the master device 101 and the slave device 102 may collaboratively implement a distributed shooting function more efficiently and flexibly, so that a good shooting effect is implemented in the distributed shooting scenario, and good shooting experience is simultaneously provided for the user.

Specific details of determining, by the master device 101, the shooting policy in the shooting process with reference to the shooting capability of the slave device 102 are described in detail in subsequent embodiments. Therefore, details are not described herein again.

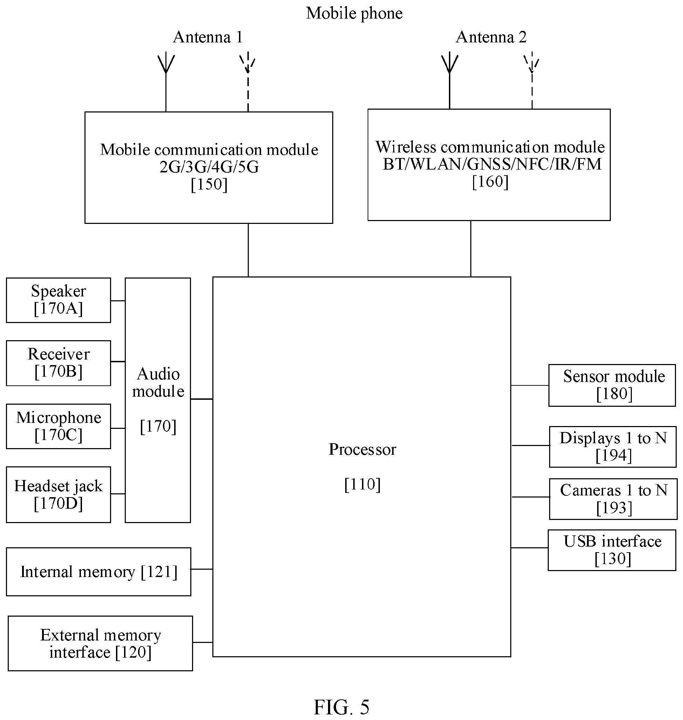

For example, an example in which the mobile phone is used as the master device 201 in the distributed shooting system 200. FIG. 5 is a schematic diagram of a structure of the mobile phone.

The mobile phone may include a processor 110, an external memory interface 120, an internal memory 121, a universal serial bus (universal serial bus, USB) interface 130, an antenna 1, an antenna 2, a mobile communication module 150, a wireless communication module 160, an audio module 170, a speaker 170A, a receiver 170B, a microphone 170C, a headset jack 170D, a sensor module 180, and the like.

It may be understood that the structure shown in embodiments of the present invention does not constitute a specific limitation on the mobile phone. In some other embodiments of this application, the mobile phone may include more or fewer components than those shown in the figure, or may combine some components, or may split some components, or may have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

A wireless communication function of the mobile phone may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal.

The mobile communication module 150 may provide a solution, applied to the mobile phone, to wireless communication including 2G, 3G, 4G, 5G, or the like. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a solution, applied to the mobile phone, to wireless communication including a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, in the mobile phone, the antenna 1 and the mobile communication module 150 are coupled, and the antenna 2 and the wireless communication module 160 are coupled, so that the mobile phone can communicate with a network and another device by using a wireless communication technology.

The mobile phone implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the mobile phone may include one or N displays 194, where N is a positive integer greater than 1.

The mobile phone may implement a photographing function by using the ISP, a camera 193, the video codec, the GPU, the display 194, the application processor, and the like.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone may include one or N cameras 193, where N is a positive integer greater than 1.

The external memory interface 120 may be configured to connect to an external memory card, for example, a micro SD card, to extend a storage capability of the mobile phone. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the mobile phone and data processing. The internal memory 121 may include a program storage area and a data storage area. The program storage area may store an operating system, an application required by at least one function (for example, a voice playing function or an image playing function), and the like. The data storage area may store data (for example, audio data or an address book) created during use of the mobile phone, and the like. In addition, the internal memory 121 may include a high-speed random access memory, or may include a nonvolatile memory, for example, at least one magnetic disk storage device, a flash memory, or a universal flash storage (universal flash storage, UFS).

The mobile phone may implement an audio function such as music playback or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The mobile phone may listen to music or answer a hands-free call by using the speaker 170A.

The receiver 170B, also referred to as an "earpiece", is configured to convert an electrical audio signal into a sound signal. When the mobile phone answers a call or receives a voice message, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the mobile phone. In some other embodiments, two microphones 170C may be disposed in the mobile phone, to collect a sound signal and further implement a noise reduction function. In some other embodiments, three, four, or more microphones 170C may alternatively be disposed in the mobile phone, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

Certainly, the mobile phone may further include a charging management module, a power management module, a battery, a button, an indicator, one or more SIM card interfaces, and the like. This is not limited in embodiments of this application.

A software system of the mobile phone may use a layered architecture, an event-driven architecture, a microkernel architecture, a microservice architecture, or a cloud architecture. In embodiments of this application, an Android system of a layered architecture is used as an example to describe the software structure of the mobile phone. Certainly, in another operating system (for example, a HarmonyOS system or a Linux system), provided that functions implemented by functional modules are similar to those in embodiments of this application, the operating system falls within a scope of the claims of this application and equivalent technologies thereof.

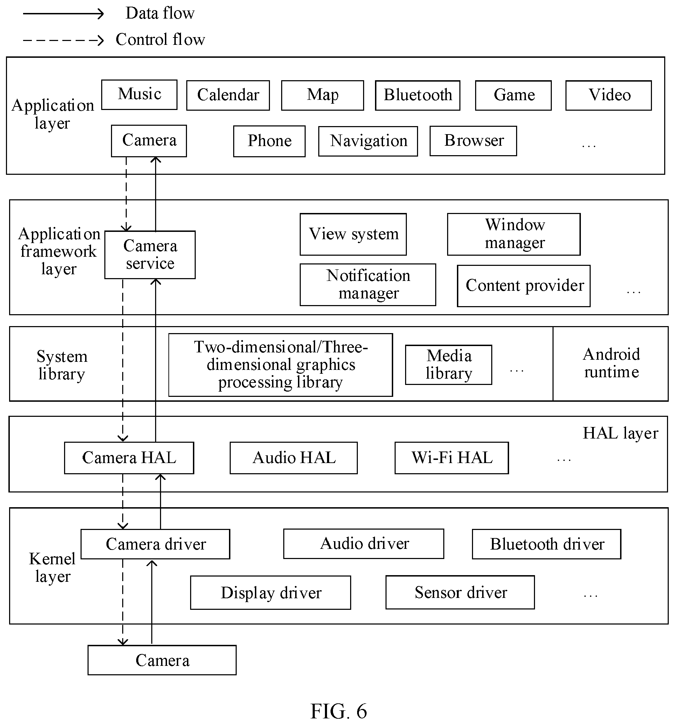

FIG. 6 is a block diagram of a software structure of a mobile phone according to an embodiment of this application.

In a layered architecture, software is divided into several layers, and each layer has a clear role and task. The layers communicate with each other through a software interface. In some embodiments, the Android system is divided into five layers, namely, an application layer, an application framework layer, an Android runtime (Android runtime) and a system library, an HAL (hardware abstraction layer) layer, and a kernel layer from top to bottom.

The application layer may include a series of application packages.

As shown in FIG. 6, applications such as Phone, Memo, Browser, Contacts, Gallery, Calendar, Map, Bluetooth, Music, Video, and Messages may be installed at the application layer.

In embodiments of this application, an application having a shooting function, for example, a camera application, may be installed at the application layer. Certainly, when another application needs to use the shooting function, the camera application may also be invoked to implement the shooting function.

The application framework layer provides an application programming interface (application programming interface, API) and a programming framework for an application at the application layer. The application framework layer includes some predefined functions.

As shown in FIG. 6, a camera application is used as an example, and a camera service (CameraService) is set at the application framework layer. The camera application may invoke a preset API to start the CameraService. During running, the CameraService may interact with the Camera HAL at the HAL (hardware abstraction layer). The Camera HAL is responsible for interacting with a hardware device (for example, a camera) that implements a shooting function in the mobile phone. The Camera HAL hides implementation details (for example, a specific image processing algorithm) of a related hardware device. In addition, the Camera HAL may provide an Android system with an interface for invoking the related hardware device.

For example, a camera application may send, to the CameraService, a related control instruction (for example, preview, zoom-in, photographing, or a video recording instruction) delivered by the user. The CameraService may send the received control instruction to the Camera HAL, so that the Camera HAL may invoke a camera driver at a kernel layer based on the received control instruction, to drive a hardware device such as a camera to collect original image data in response to the control instruction. For example, the camera may transmit, through a camera driver, collected original image data of each frame to the camera HAL based on a specific frame rate. For a process of transmitting the control instruction inside the operating system, refer to a specific transmitting process of a control flow in FIG. 6.

In addition, after receiving the control instruction, the CameraService may determine a shooting policy in this case based on the received control instruction. A specific image processing task that needs to be performed on the original image data is set in the shooting policy. For example, in a preview mode, the CameraService may set a default image processing task 1 in the shooting policy to implement a face detection function. For another example, if the user enables a beauty function in the preview mode, the CameraService may further set an image processing task 2 in the shooting policy to implement the beauty function. Further, the CameraService may send the determined shooting policy to the Camera HAL.

Subsequently, an image processing process of the mobile phone is generally completed at the Camera HAL, to be specific, the Camera HAL has an image processing capability of the mobile phone. After receiving the original image data collected by the camera, the Camera HAL may perform a corresponding image processing task on the original image data based on the shooting policy delivered by the CameraService, to obtain target image data after image processing. For example, the Camera HAL may perform the image processing task 1 by using a preset face detection algorithm. For another example, the Camera HAL may perform the image processing task 2 by using a preset beauty algorithm. Further, the Camera HAL may report the obtained target image data to the camera application through the CameraService, and the camera application may display the target image data on a display interface, or the camera application may store the target image data in the mobile phone in a form of a photo or a video. For a process of transmitting the image data (for example, the original image data and the target image data) inside the operating system, refer to a specific transmitting process of a data flow in FIG. 6.

In addition, the application framework layer may further include a window manager, a content provider, a view system, a resource manager, a notification manager, and the like. This is not limited in embodiments of this application.

For example, the window manager is configured to manage a window program. The window manager may obtain a size of the display, determine whether there is a status bar, perform screen locking, take a screenshot, and the like. The content provider is configured to store and obtain data, and enable the data to be accessed by an application. The data may include a video, an image, an audio, calls that are made and answered, a browsing history and bookmarks, an address book, and the like. The view system may be configured to construct a display interface of an application. Each display interface may include one or more controls. Generally, the controls may include interface elements such as an icon, a button, a menu, a tab, a text box, a dialog box, a status bar, a navigation bar, and a widget (Widget). The resource manager provides various resources for an application, such as a localized character string, an icon, a picture, a layout file, and a video file. The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed on the status bar, an alert sound is played, vibration is generated, or an indicator light blinks.

As shown in FIG. 6, the Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem, and provide fusion of 2D and 3D layers for a plurality of applications. The media library supports playback and recording in a plurality of commonly used audio and video formats, and static image files. The media library may support a plurality of audio and video coding formats, for example, MPEG4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is located below the HAL and is a layer between hardware and software. The kernel layer includes at least a display driver, a camera driver, an audio driver, a sensor driver, and the like. This is not limited in embodiments of this application.

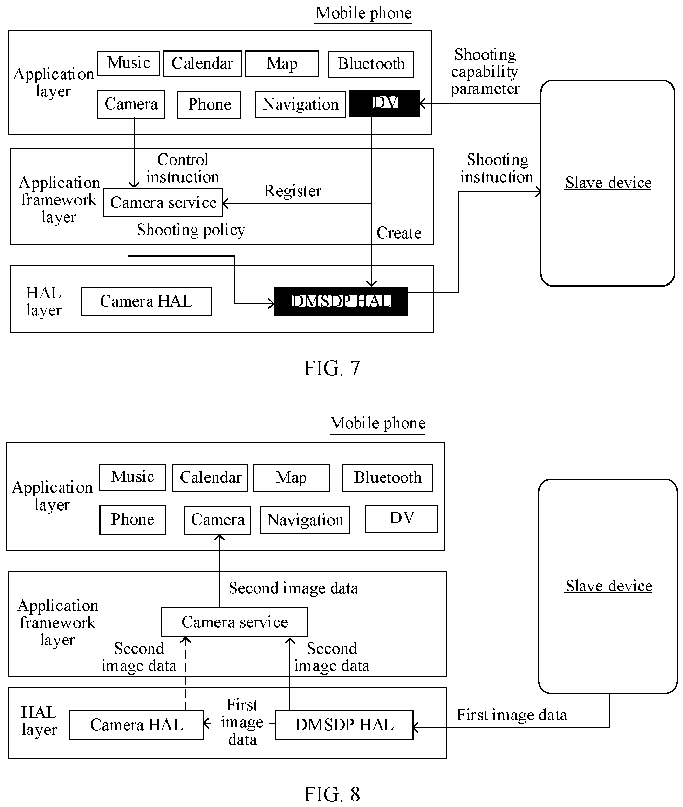

Based on a software architecture of the Android system shown in FIG. 6, in embodiments of this application, as shown in FIG. 7, a device virtualization (Device Virtualization) application used to implement a distributed shooting function may be installed at the application layer of the mobile phone, and may be subsequently referred to as a DV application. The DV application may run on the mobile phone as a system application. Alternatively, a function implemented by the DV application may be run in the mobile phone in a form of a system service.

When the mobile phone needs to implement a distributed shooting function by using a camera of another electronic device, the DV application in the mobile phone may use the another electronic device as a slave device of the mobile phone to establish a network connection to the mobile phone. The network connection established between the mobile phone and the slave device may specifically refer to a network connection of a service channel (namely, a service connection). For example, before the mobile phone establishes the network connection to the slave device, the mobile phone may have established a connection to the slave device through a Wi-Fi network. In this case, the connection refers to a data channel connection (namely, a data connection). After the mobile phone establishes the network connection to the slave device, the mobile phone may establish the service connection to the slave device based on the established data connection. For example, the network connection may be a P2P connection based on TCP (transmission control protocol) or UDP (user datagram protocol). This is not limited in embodiments of this application.

Still as shown in FIG. 7, after a DV application of a mobile phone establishes a network connection to a slave device, the DV application may obtain a shooting capability parameter of the slave device based on the network connection, where the shooting capability parameter indicates one or more image processing tasks supported by the slave device. For example, the shooting capability parameter may include a specific image processing algorithm supported by the slave device, to reflect a specific shooting capability of the slave device. Further, the DV application may invoke a preset interface of an HAL, and input the obtained shooting capability parameter to the preset interface, to create, at the HAL, a hardware abstraction module corresponding to the slave device. For example, in embodiments of this application, a hardware abstraction module created by the DV application based on the shooting capability parameter of the slave device may be referred to as a DMSDP (Distributed Mobile Sensing Development Platform) HAL, or may be referred to as a virtual Camera HAL. Different from a conventional Camera HAL, the DMSDP HAL does not correspond to an actual hardware device of the mobile phone, but corresponds to a slave device currently connected to the mobile phone. The mobile phone may be used as a master device to receive and send data from and to the slave device through the DMSDP HAL. The slave device is used as a virtual device of the mobile phone, and completes various services in a distributed shooting scenario in collaboration with the slave device.

In some embodiments, the DV application of the mobile phone may further obtain an audio capability parameter (for example, an audio play delay, an audio sampling rate, or a quantity of sound channels) and a display capability parameter (for example, a screen resolution and a display data encoding and decoding algorithm) of the slave device. Certainly, if the slave device further has another capability (such as a printing capability), the slave device may also send a related capability parameter to the DV application of the mobile phone. Similar to the shooting capability parameter, the DV application may input all capability parameters related to the slave device into the preset interface, to create, at the HAL, a hardware abstraction module corresponding to the slave device, for example, the DMSDP HAL. In this case, the DMSDP HAL not only has the image processing capability of the slave device, but also has capabilities such as audio and display of the slave device, so that the slave device may serve as the virtual device of the mobile phone and complete various services in the distributed scenario in collaboration with the mobile phone.

In addition, still as shown in FIG. 7, in embodiments of this application, in addition to creating a corresponding DMSDP HAL for the slave device of the mobile phone at the HAL, the DV application may further send the shooting capability parameter of the slave device to the CameraService for storage, to be specific, register a shooting capability of the current slave device in the CameraService.

When a camera application is run on the mobile phone, the camera application may deliver a control instruction such as preview, zoom, photographing, or video recording to the CameraService. After receiving the control instruction, the CameraService may determine, based on the control instruction, one or more image processing tasks that need to be performed subsequently, for example, an image processing task 1 corresponding to a beauty function, an image processing task 2 corresponding to an image stabilization function, or an image processing task 3 corresponding to a face detection function. In this way, the CameraService may set a corresponding shooting policy with reference to the shooting capability parameter of the current slave device, and allocate, in the shooting policy, the one or more image processing tasks to the mobile phone and the slave device to be performed. For example, the CameraService may set, in the shooting policy, that the slave device performs the image processing task 1, and set the mobile phone to perform the image processing task 2 and the image processing task 3. Certainly, the CameraService may alternatively set, in the shooting policy, that all image processing tasks are independently completed by the mobile phone or the slave device. This is not limited in embodiments of this application.

Further, still as shown in FIG. 7, the CameraService of the mobile phone may deliver the shooting policy to the DMSDP HAL, and send a shooting instruction to the slave device through the DMSDP HAL, to indicate the slave device to perform the image processing task allocated to the slave device in the shooting policy. In this way, as shown in FIG. 8, after collecting original image data by using a camera, a slave device may perform a corresponding image processing task on the original image data in response to the shooting instruction, and send processed image data (for example, first image data) to a DMSDP HAL of a mobile phone. Because the DMSDP HAL of the mobile phone has obtained the shooting policy, the DMSDP HAL may determine, based on the shooting policy, that an image processing process of the first image data is completed by the DMSDP HAL or completed by a Camera HAL.

For example, if an image processing task allocated to the mobile phone in the shooting policy is an image processing task supported by the slave device, because a shooting capability parameter of the slave device is already input to the DMSDP HAL when the DMSDP HAL is created, to be specific, the DMSDP HAL is capable of processing the image processing task supported by the slave device, in this case, the DMSDP HAL may perform a corresponding image processing task on the first image data based on the shooting policy, to finally obtain second image data.

For another example, if the image processing task allocated to the mobile phone in the shooting policy is an image processing task supported by the mobile phone, in this case, the Camera HAL is capable of processing the image processing task supported by the mobile phone. Therefore, as shown by a dashed line in FIG. 8, the DMSDP HAL may send the received first image data to the Camera HAL, and the Camera HAL performs a corresponding image processing task on the first image data based on the shooting policy, to finally obtain the second image data. In a possible implementation, the DMSDP HAL may first send the received first image data to the CameraService, and then the CameraService sends the first image data to the Camera HAL for image processing (the data flow direction is not shown in FIG. 8). In other words, the DMSDP HAL in the mobile phone may directly exchange the image data with the Camera HAL, or the DMSDP HAL in the mobile phone may exchange the image data through the CameraService.

Subsequently, still as shown in FIG. 8, the DMSDP HAL (or the Camera HAL) of the mobile phone may send the second image data obtained after the image processing to the CameraService, and then the CameraService sends the second image data to the camera application, so that the camera application may display the second image data on a display interface or store the second image data in the mobile phone.

It may be learned that in the distributed shooting scenario, when the mobile phone needs to perform shooting by using the camera of the slave device, the DV application of the mobile phone may obtain the shooting capability parameter of the slave device. Further, the DV application may create a corresponding DMSDP HAL at the HAL based on the shooting capability parameter, so that the DMSDP HAL in the mobile phone has an image processing capability of the slave device. In addition, the DV application may register the shooting capability of the slave device in the CameraService, so that the CameraService may determine the shooting policy in a shooting process in real time based on the shooting capability of the slave device, and allocate, through the shooting policy, an image processing task that needs to be performed to the mobile phone and the slave device to be performed. In this way, after the slave device collects the original image data, the mobile phone and the slave device may perform corresponding image processing on the original image data based on the shooting capability of the mobile phone and the shooting capability of the slave device, so that the mobile phone and the slave device may collaboratively implement a distributed shooting function more efficiently and flexibly. This implements a good shooting effect in the distributed shooting scenario, and provides good shooting experience for the user.

It should be noted that the DMSDP HAL created by the DV application of the mobile phone at the HAL may be dynamically updated. When the slave device of the mobile phone changes (for example, the slave device is switched from a television to a watch), or when the shooting capability of the slave device changes (for example, an image processing algorithm is updated after the slave device is upgraded), the slave device may dynamically send a latest shooting capability parameter to the mobile phone. Further, the DV application of the mobile phone may update the DMSDP HAL based on the latest shooting capability parameter, so that the DMSDP HAL matches the shooting capability of the slave device. In addition, the DV application of the mobile phone may register the latest audio capability parameter in the CameraService, so that the CameraService may update the current shooting policy based on the latest shooting capability parameter in the shooting process.

In addition, the foregoing embodiment is described by using an example in which there is one slave device of the mobile phone in the distributed shooting scenario. In some embodiments, the mobile phone may further distribute a shooting function of the mobile phone to a plurality of slave devices for implementation.

For example, when the slave device of the mobile phone includes a slave device 1 and a slave device 2, similar to the foregoing embodiment, the DV application of the mobile phone may separately establish a network connection to the slave device 1 and the slave device 2, and obtain an audio capability parameter of each slave device. Further, the DV application may create, at the HAL based on the audio capability parameter of each slave device, a DMSDP HAL corresponding to each slave device. For example, the DV application may create the DMSDP HAL1 at the HAL based on a shooting capability parameter 1 of the slave device 1, and the DV application may create a DMSDP HAL2 at the HAL based on a shooting capability parameter 2 of the slave device 2. Further, after the mobile phone registers a shooting capability of the slave device 1 and a shooting capability of the slave device 2 in the CameraService, the CameraService may customize a corresponding shooting policy based on a shooting capability parameter of each slave device in the shooting process. In this way, each slave device may perform a related image processing task based on a shooting capability of the slave device and a corresponding shooting policy, and finally send processed image data to the mobile phone through a corresponding DMSDP HAL. This implements a cross-device distributed shooting function.

Still using the mobile phone as the master device as an example, the following describes, with reference to a specific example, the shooting method in the distributed shooting scenario provided in embodiments of this application.

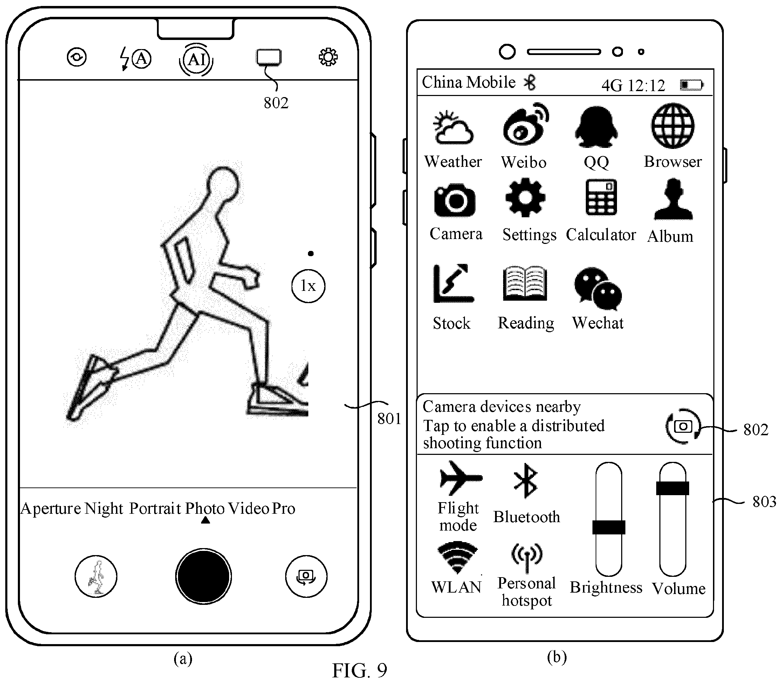

In embodiments of this application, a function button used to implement a distributed shooting function may be arranged in the mobile phone. For example, as shown in (a) in FIG. 9, if it is detected that a user starts a camera application of a mobile phone, the mobile phone may enable a camera of the mobile phone to start shooting, and the mobile phone may display a preview interface 801 of the camera application. A function button 802 of a distributed shooting function is arranged in the preview interface 801. If the user wants to perform shooting by using a camera of another electronic device, the user may tap the function button 802.

Alternatively, the mobile phone may further set the function button 802 of the distributed shooting function in a control center, a drop-down menu, a HiBoard menu, or another application (such as a video call application or a camera application) of the mobile phone. This is not limited in embodiments of this application. For example, as shown in (b) in FIG. 9, the mobile phone may display a control center 803 in response to an operation of opening the control center by the user, and the function button 802 is arranged in the control center 803. If the user wants to perform shooting by using a camera of another electronic device, the user may tap the function button 802.

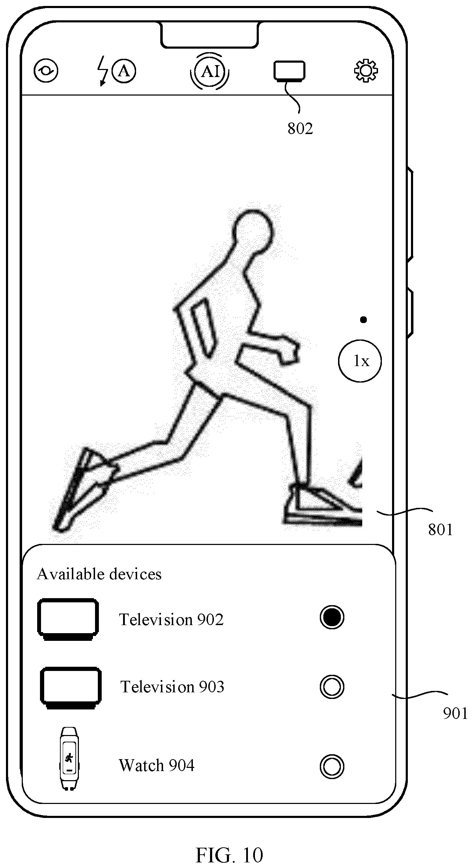

For example, after the mobile phone detects that the user taps the function button 802, the DV application may trigger the mobile phone to search for one or more candidate devices that have a shooting function nearby. In addition, as shown in FIG. 10, a mobile phone may display, in a dialog box 901, one or more candidate devices that are found. For example, the mobile phone may query, in a server, an electronic device that has a shooting function and that is logged in to by using a same account as the mobile phone, and display the found electronic device as a candidate device in the dialog box 901.

Alternatively, in some embodiments, the mobile phone may automatically trigger a distributed shooting function without setting the function button 802. For example, when the mobile phone runs a video call application, if a video call request sent by a contact is detected, the mobile phone may automatically search for one or more candidate devices that have a shooting function nearby. For another example, when detecting that the user starts a camera application in the mobile phone, the mobile phone may also automatically search for one or more candidate devices that have a shooting function nearby. In addition, as shown in FIG. 10, a mobile phone may display, in a dialog box 901, one or more candidate devices that are found.

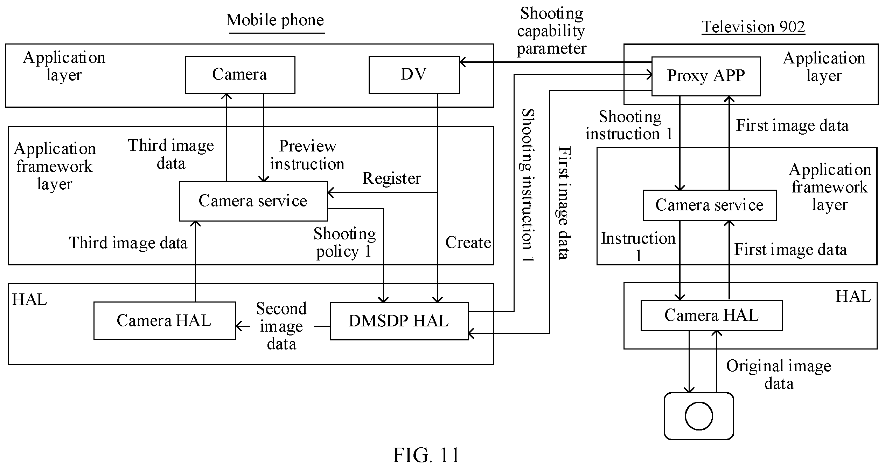

For example, an example in which the candidate devices in the dialog box 901 include a television 902, a television 903, and a watch 904 is used. The user may select, in the dialog box 901, a slave device that implements a distributed shooting function in collaboration with the mobile phone in this case. For example, if the mobile phone detects that the user selects the television 902 in the dialog box 901, it indicates that the user wants to perform shooting by using a camera of the television 902. In this case, a DV application of the mobile phone may establish a network connection to the mobile phone by using the television 902 as a slave device of the mobile phone. Further, as shown in FIG. 11, a DV application obtains a shooting capability parameter of a television 902 from the television 902 based on the network connection.

Still as shown in FIG. 11, an architecture of an operating system in the television 902 is similar to an architecture of an operating system in a mobile phone. A proxy application may be installed at an application layer of the television 902, and the proxy application is configured to perform data receiving and sending with another device (for example, the mobile phone). Alternatively, the proxy application may run in the television 902 in a form of an SDK (Software Development Kit) or a system service. A CameraService is set at an application framework layer of the television 902. A Camera HAL is arranged at an HAL of the television 902, and a Camera HAL of the television 902 corresponds to a hardware device (for example, a camera) that is in the television 902 and that is used to shoot image data.

Still as shown in FIG. 11, after the mobile phone establishes a network connection to the television 902, the DV application of the mobile phone may send an obtaining request of a shooting capability parameter to the proxy application of the television 902. Further, in response to the obtaining request, the proxy application of the television 902 may obtain the shooting capability parameter of the television 902 from the CameraService of the television 902, and send the shooting capability parameter of the television 902 to the DV application of the mobile phone. The shooting capability parameter of the television 902 indicates one or more image processing tasks supported by the television 902. For example, the shooting capability parameter of the television 902 may include one or more image processing algorithms such as a facial recognition algorithm and an automatic focusing algorithm supported by the television 902. The shooting capability parameter of the television 902 may be related to a hardware shooting capability (for example, a quantity of cameras, a resolution, and a model of an image processor) of the television 902, or may be related to a software shooting capability (for example, an image processing algorithm set in the television 902) of the television 902. A person skilled in the art may set the shooting capability parameter based on actual experience or an actual application scenario. This is not limited in embodiments of this application.

After the DV application of the mobile phone obtains the shooting capability parameter of the television 902, still as shown in FIG. 11, the DV application of the mobile phone may create, at the HAL based on the shooting capability parameter, a DMSDP HAL corresponding to the television 902, so that the DMSDP HAL has an image processing capability of the slave device. In addition, the mobile phone may subsequently perform data receiving and sending with the television 902 through the DMSDP HAL.

In addition, after the DV application of the mobile phone obtains the shooting capability parameter of the television 902, the DV application of the mobile phone may further register the shooting capability parameter of the television 902 in the CameraService of the mobile phone. The CameraService of the mobile phone may continuously receive control instructions delivered by the camera application in a running process of the camera application. For example, when the camera application is started, the camera application may send a preview instruction to the CameraService, to trigger the camera application to enter a preview mode. For another example, when the camera application detects a button for the user to select a video recording mode, the camera application may send a video recording instruction to the CameraService, to trigger the camera application to enter the video recording mode. In different shooting modes, the camera application may further send control instructions corresponding to different shooting functions to the CameraService. For example, if it is detected, in the preview mode, that the user enables a beauty function, the camera application may send a beauty instruction to the CameraService. For another example, in the video recording mode, if it is detected that the user enables a filter 1, the camera application may send, to the CameraService, a control instruction for adding the filter 1.

In embodiments of this application, the CameraService of the mobile phone may determine a current shooting policy based on a control instruction delivered by a latest camera application and with reference to a shooting capability parameter of a current slave device (namely, the television 902).

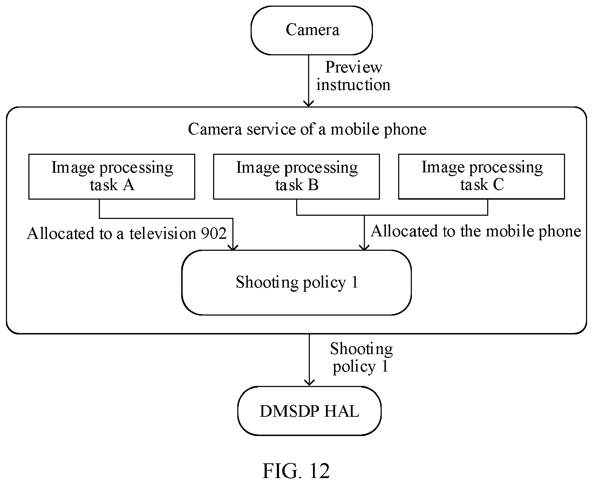

For example, as shown in FIG. 12, a CameraService of a mobile phone may first determine, based on a control instruction delivered by a latest camera application, N (N is an integer greater than 0) image processing tasks that need to be subsequently performed. For example, if the control instruction delivered by the latest camera application is a preview instruction, the CameraService of the mobile phone may determine that an image processing task A of automatic focusing needs to be performed in a preview mode. For another example, if a facial recognition function is enabled by default on the mobile phone in the preview mode, the CameraService of the mobile phone may further determine that an image processing task B for facial recognition needs to be performed. For another example, if it is detected that a user enables a beauty function in the preview mode, the CameraService of the mobile phone may further determine an image processing task C for which the beauty function needs to be performed.

Further, still as shown in FIG. 12, the CameraService of the mobile phone may allocate the N image processing tasks to the mobile phone and a television 902 with reference to a shooting capability of the mobile phone and a shooting capability of a current slave device (namely, the television 902). For example, the N image processing tasks include the image processing task A, the image processing task B, and the image processing task C. The CameraService of the mobile phone may determine, through a shooting capability parameter of the television 902, an image processing task specifically supported by the television 902, and the CameraService of the mobile phone may obtain an image processing task specifically supported by the mobile phone.

Further, for the image processing task A, if one of the mobile phone and the television 902 supports the image processing task A, the CameraService of the mobile phone may allocate the image processing task A to a device that supports the image processing task A. For example, if the mobile phone supports the image processing task A, but the television 902 does not support the image processing task A, the CameraService of the mobile phone may allocate the image processing task A to the mobile phone to be performed.

Alternatively, the image processing task A is still used as an example. If both the mobile phone and the television 902 support the image processing task A, the CameraService of the mobile phone may allocate the image processing task A to any device in the mobile phone or the television 902. For example, the CameraService of the mobile phone may calculate time consumed T1 for the mobile phone to perform the image processing task A and time consumed T2 for the television 902 to perform the image processing task A. If T1<T2, the CameraService of the mobile phone may allocate the image processing task A to the mobile phone. Correspondingly, if T1>T2, the CameraService of the mobile phone may allocate the image processing task A to the television 902. In other words, the CameraService of the mobile phone may allocate the image processing task A to a device with a higher processing speed, to improve processing efficiency in a subsequent image processing process.

For another example, if both the mobile phone and the television 902 support the image processing task A, the CameraService of the mobile phone may further determine, based on current load of the mobile phone and the television 902, a specific device that subsequently performs the image processing task A. For example, if the CameraService of the mobile phone has allocated the image processing task B and the image processing task C to the mobile phone to be performed, and in this case, if the image processing task A continues to be allocated to the mobile phone to be performed, load of the mobile phone is far greater than load of the television 902. As a result, the load of the mobile phone is excessively high, and the load of the television 902 is excessively low. In this case, the CameraService of the mobile phone may allocate the image processing task A to the television 920 to be performed. In other words, the CameraService of the mobile phone may allocate the image processing task A to an idle device, to improve processing efficiency in a subsequent image processing process.

In some embodiments, the CameraService of the mobile phone may allocate the image processing task supported by the television 902 to the mobile phone to be performed. For example, when the load of the television 902 is high and the load of the mobile phone is low, the CameraService of the mobile phone may allocate the image processing task supported by the television 902 to the mobile phone to be performed. Because the DMSDP HAL of the mobile phone has an image processing capability of the television 902, even if the CameraService of the mobile phone allocates the image processing task supported by the television 902 to the mobile phone, the mobile phone may still complete the image processing task at a DMSDP HAL.

In addition, because a Camera HAL of the mobile phone has the image processing capability of the mobile phone (namely, a master device), and the DMSDP HAL of the mobile phone has the image processing capability of the television 902 (namely, a slave device), the mobile phone generally has a capability of performing the N image processing tasks as the master device, but the slave device (namely, the television 902) of the mobile phone does not necessarily have a capability of performing the N image processing tasks. In other words, for an image processing task in the N image processing tasks, a case in which neither the mobile phone nor the television 902 supports the image processing task generally does not occur.

Similarly, the CameraService of the mobile phone may further allocate, based on the foregoing method, the image processing task B and the image processing task C to the mobile phone or the television 902 to be performed. It may be understood that a person skilled in the art may set a corresponding algorithm (for example, a packing algorithm, a first adaptation algorithm, or an optimal adaptation algorithm) to allocate, to the mobile phone and the television 902, the N image processing tasks that need to be performed during shooting, so that the mobile phone and the television 902 may perform image processing on subsequently collected original image data by using shooting capabilities of the mobile phone and the television 902 to a maximum extent. This improves efficiency and a speed of performing image processing during collaborative shooting of the mobile phone and the television 902.

In some embodiments, the CameraService of the mobile phone may allocate all image processing tasks (namely, the N image processing tasks) to one device of the mobile phone or the television 902 to be performed. For example, when the television 902 is not capable of performing the image processing task A, the image processing task B, and the image processing task C, the CameraService of the mobile phone may allocate all the image processing task A, the image processing task B, and the image processing task C to the mobile phone. In this case, the television 902 only needs to collect the original image data by using a camera, and does not need to perform image processing on the collected original image data.

Finally, still as shown in FIG. 12, after determining an allocation result of each of the N image processing tasks, the CameraService of the mobile phone may use the allocation result as a current shooting policy 1 and output the current shooting policy 1 to the DMSDP HAL of the mobile phone.

Still as shown in FIG. 11, after receiving the shooting policy 1, the DMSDP HAL of the mobile phone may send a shooting instruction 1 to the television 902 based on the shooting policy 1, to indicate the television 902 to perform, based on the shooting policy 1, an image processing task allocated to the television 902. For example, the DMSDP HAL of the mobile phone may carry, in the shooting instruction 1, an identifier of the image processing task A that is in the shooting policy 1 and that needs to be performed by the television 902, and send the shooting instruction 1 to the proxy application of the television 902.

Still as shown in FIG. 11, after receiving the shooting instruction 1, the proxy application of the television 902 may invoke a camera of the proxy application to start collecting the original image data. In addition, the proxy application of the television 902 may send the shooting instruction 1 to the CameraService of the television 902, and the CameraService of the television 902 may determine, based on the identifier of the image processing task A in the shooting instruction 1, that the image processing task A needs to be performed on the original image data. Further, the CameraService of the television 902 may deliver, to the Camera HAL of the television 902, an instruction 1 that performs the image processing task A (the instruction 1 may be the same as or different from the shooting instruction 1). In this way, after the camera of the television 902 reports the collected original image data to the Camera HAL of the television 902, the Camera HAL of the television 902 may perform the image processing task A on the original image data, to obtain processed first image data. Further, the Camera HAL of the television 902 may report the first image data to the CameraService of the television 902, and then the CameraService of the television 902 uploads the first image data to the proxy application of the television 902. Finally, the proxy application of the television 902 may send the first image data to the DMSDP HAL of the mobile phone.

In some embodiments, when the shooting instruction 1 does not indicate the television 902 to perform any image processing task, it indicates that all image processing tasks that need to be performed in this case are completed by the mobile phone. In this case, the CameraService of the television may directly send the original image data reported by the Camera HAL as the first image data to the proxy application of the television 902. In this case, the first image data is the same as the original image data.

In addition, in the foregoing embodiment, an example in which the proxy application of the television 902 starts collecting the original image data after receiving the shooting instruction 1 is used for description. It may be understood that the television 902 may also automatically enable a camera of the television 902 after establishing a network connection to the mobile phone to start collecting the original image data. This is not limited in embodiments of this application.

Still as shown in FIG. 11, after receiving the first image data sent by the television 902, the DMSDP HAL of the mobile phone may perform, based on the shooting policy 1, the image processing task allocated to the mobile phone. For example, in the shooting policy 1, the mobile phone needs to perform the image processing task B and the image processing task C, where the image processing task B is the image processing task supported by the television 902, and the image processing task C is the image processing task supported by the mobile phone. In this case, the DMSDP HAL of the mobile phone may perform the image processing task B on the received first image data based on the shooting policy 1, to obtain the processed second image data. Further, the DMSDP HAL of the mobile phone may send the second image data to the Camera HAL of the mobile phone. In a possible implementation, the DMSDP HAL of the mobile phone may first send the second image data to the CameraService of the mobile phone, and then the CameraService of the mobile phone sends the second image data to the Camera HAL of the mobile phone (the data flow direction is not shown in FIG. 11). In this way, the Camera HAL of the mobile phone may perform the image processing task C on the received second image data based on the shooting policy 1, to obtain processed third image data. Subsequently, the Camera HAL of the mobile phone may report the third image data to the CameraService of the mobile phone, and then the CameraService of the mobile phone uploads the third image data to the camera application of the mobile phone.

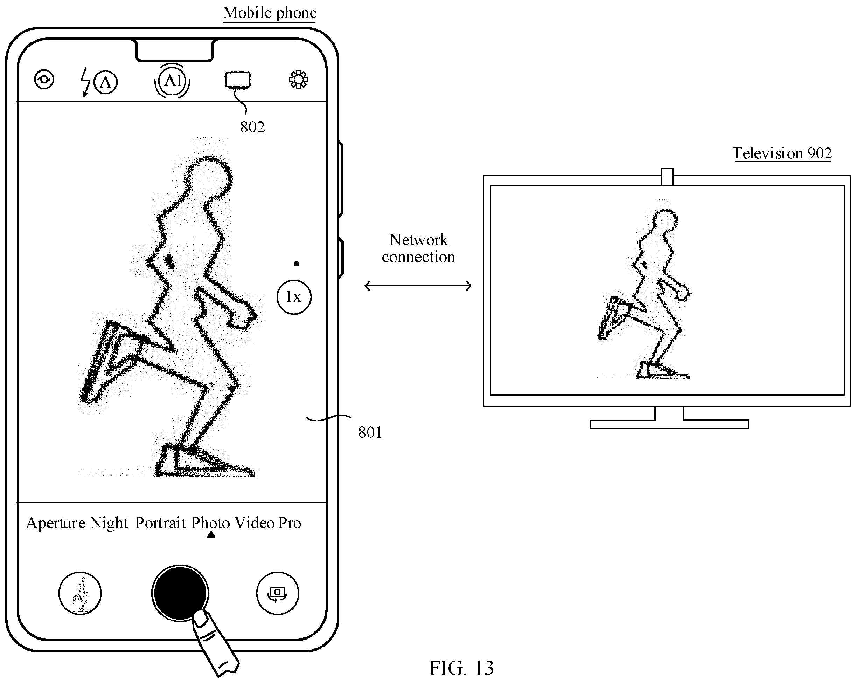

The third image data is image data obtained after the mobile phone and the television 902 perform collaborative processing in response to a preview instruction delivered by the camera application. As shown in FIG. 13, after receiving the third image data, a camera application of a mobile phone may display the third image data in a preview box 802 of a preview interface 801. In this case, a user may view, in a preview interface 801 of the mobile phone, an image collected by a television 902, and an image presented in the preview box 802 is an image obtained after the mobile phone and the television 902 collaboratively perform image processing.

In some embodiments, if an image processing task B that needs to be performed by the mobile phone in a shooting policy 1 is an image processing task supported by the television 902, and an image processing task C that needs to be performed by the mobile phone in the shooting policy 1 is also an image processing task supported by the television 902, after obtaining first image data from the television 902, a DMSDP HAL of the mobile phone may directly perform the image processing task B and the image processing task C on the received first image data based on the shooting policy 1, and send image data after image processing to a CameraService of the mobile phone. A Camera HAL of the mobile phone does not need to perform the image processing.

Alternatively, if the image processing task B that needs to be performed by the mobile phone in the shooting policy 1 is the image processing task supported by the mobile phone, and the image processing task C that needs to be performed by the mobile phone in the shooting policy 1 is also the image processing task supported by the mobile phone, after obtaining the first image data from the television 902, the DMSDP HAL of the mobile phone may directly send the first image data to the Camera HAL of the mobile phone, and the Camera HAL of the mobile phone performs the image processing task B and the image processing task C on the received first image data, and sends the image data obtained after the image processing to the CameraService of the mobile phone.

It may be learned that in embodiments of this application, a master device (for example, the mobile phone) may allocate, to a slave device by using a shooting capability of the slave device (for example, the television 902) in a distributed shooting scenario, an image processing task that is suitable for the slave device to be performed, and allocate, to the master device, an image processing task that is suitable for the master device to be performed. In this way, a shooting capability of the master device and the shooting capability of the slave device may be fully used to perform corresponding image processing tasks. This improves resource utilization of each device in the distributed shooting scenario, improves processing efficiency of an entire shooting process, and achieves a better shooting effect.

The distributed shooting scenario shown in FIG. 13 is still used as an example. If a camera application of the mobile phone in a preview mode does not receive a new control instruction triggered by the user, for example, a control instruction such as a filter, zoom, or AI recognition is added, the mobile phone and the television 902 may continue to perform, based on the shooting policy 1, a corresponding image processing task on the original image data collected by the television 902, and finally the mobile phone displays, in the preview box 802 of the preview interface 801, all image data obtained after the image processing.

In some embodiments, if the camera application of the mobile phone receives, in the preview mode, a new control instruction triggered by the user, the mobile phone may determine a new shooting policy based on the new control instruction, and trigger the mobile phone and the television 902 to perform, based on the new shooting policy, a corresponding image processing task on the original image data collected by the television 902.

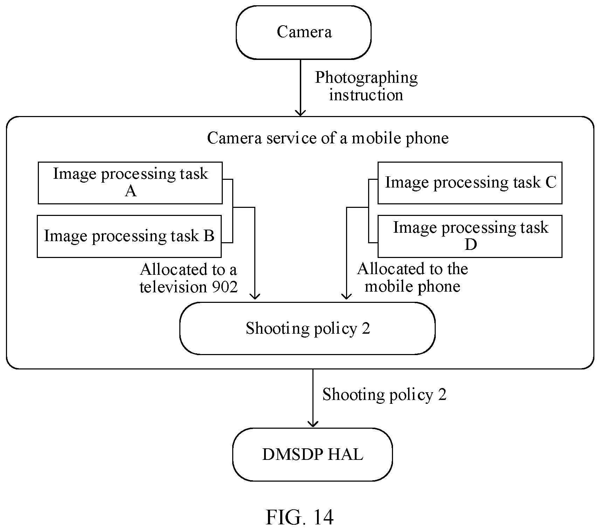

For example, if the camera application in the mobile phone detects that the user taps a shooting button in the preview interface 801, the camera application may send a corresponding shooting instruction to the CameraService of the mobile phone. As shown in FIG. 14, after receiving a shooting instruction, a CameraService of a mobile phone may determine, in response to the shooting instruction, M (N is an integer greater than 0) image processing tasks that need to be subsequently performed. For example, in addition to an image processing task A, an image processing task B, and an image processing task C in a preview mode, the CameraService of the mobile phone determines that an image processing task D whose exposure degree needs to be adjusted further needs to be performed subsequently.

Further, still as shown in FIG. 14, the CameraService of the mobile phone may allocate the image processing task A, the image processing task B, the image processing task C, and the image processing task D to the mobile phone and a television 902 with reference to a shooting capability of the mobile phone and a shooting capability of a current slave device (namely, the television 902). For a process of allocating each image processing task, refer to related descriptions in FIG. 12. Therefore, details are not described herein again.

Finally, still as shown in FIG. 14, after determining an allocation result of each of the M image processing tasks, the CameraService of the mobile phone may use the allocation result as a current shooting policy 2 and output the current shooting policy 2 to the DMSDP HAL of the mobile phone.

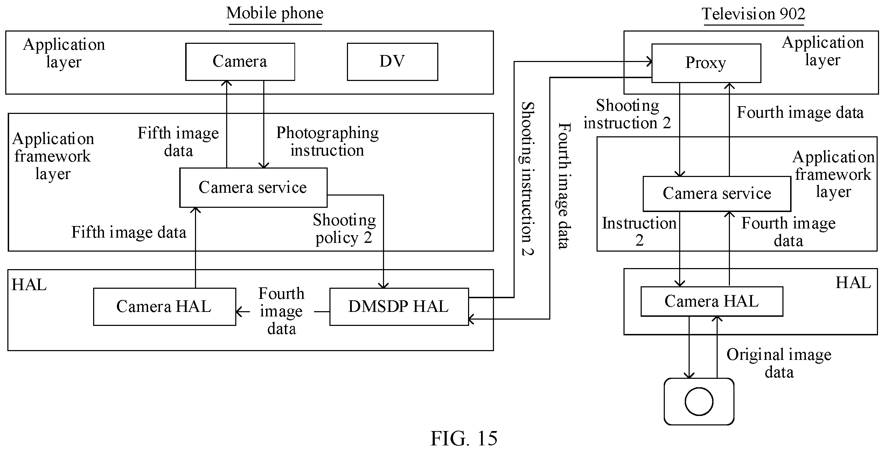

For example, in the shooting policy 2, the CameraService of the mobile phone allocates, to the television 902, the image processing task A and the image processing task B that are supported by the television 902, and allocates, to the mobile phone, the image processing task C and the image processing task D that are supported by the mobile phone. In this case, as shown in FIG. 15, after receiving the shooting policy 2, a DMSDP HAL of a mobile phone may send a shooting instruction 2 to a proxy application of a television 902 based on the shooting policy 2, to indicate the television 902 to perform, based on the shooting policy 2, an image processing task A and an image processing task B that are allocated to the television 902.

Still as shown in FIG. 15, after receiving the shooting instruction 2, the proxy application of the television 902 may send the shooting instruction 2 to a CameraService of the television 902, and the CameraService of the television 902 may determine, based on the shooting instruction 2, that the image processing task A and the image processing task B need to be performed on original image data. Further, the CameraService of the television 902 may deliver, to a Camera HAL of the television 902, an instruction 2 that performs the image processing task A and the image processing task B (the instruction 2 may be the same as or different from the shooting instruction 2). In this way, after a camera of the television 902 reports collected original image data to the Camera HAL of the television 902, the Camera HAL of the television 902 may perform the image processing task A and the image processing task B on the original image data, to obtain processed fourth image data. Further, the Camera HAL of the television 902 may report the fourth image data to the CameraService of the television 902, and then the CameraService of the television 902 uploads the fourth image data to a proxy application of the television 902. Finally, the proxy application of the television 902 may send the fourth image data to the DMSDP HAL of the mobile phone.

Still as shown in FIG. 15, after the DMSDP HAL of the mobile phone receives the fourth image data sent by the television 902, if both an image processing task C and an image processing task D that are allocated to the mobile phone in the shooting policy 2 are image processing tasks supported by the mobile phone, the DMSDP HAL of the mobile phone may send the fourth image data to the Camera HAL of the mobile phone. The Camera HAL of the mobile phone may perform the image processing task C and the image processing task D on the received fourth image data, to obtain processed fifth image data. In this way, the Camera HAL of the mobile phone may report the fifth image data to the CameraService of the mobile phone, and then the CameraService of the mobile phone uploads the fifth image data to a camera application of the mobile phone.

After receiving the fifth image data, the camera application of the mobile phone may, in response to an operation of tapping a shooting button in a preview interface 801 by the user, store the fifth image data in a form of a photo in a gallery of the mobile phone, to complete the shooting operation.

Similarly, in the shooting process, a corresponding image processing task is performed on the collected original image data by using both a shooting capability of the mobile phone (namely, a master device) and a shooting capability of the television 902 (namely, a slave device), so that resource utilization of each device in a distributed shooting scenario is improved, and processing efficiency of the entire shooting process is also correspondingly improved.

An example in which the television 902 is the slave device of the mobile phone is still used. In the distributed shooting scenario, the television 902 may process original image data collected in real time into a plurality of image data flows. For example, in a video recording scenario, after collecting the original image data by using a camera of the television 902, the television 902 may copy the collected original image data into two channels, where one channel of the original image data may be used as preview flow data for a camera application to display a preview picture in a video recording process, and the other channel of the original image data may be used as a video recording data flow to produce a final video file.

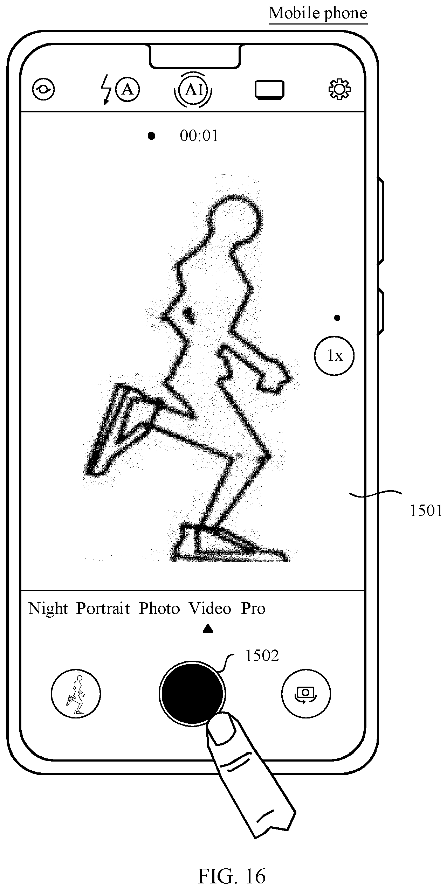

For example, as shown in FIG. 16, a user may switch a shooting mode of a camera application in a mobile phone to a video recording mode. In the video recording mode, if it is detected that the user taps a video recording button 1502 in a preview interface 1501, the mobile phone may complete the video recording operation in collaboration with the television 902.

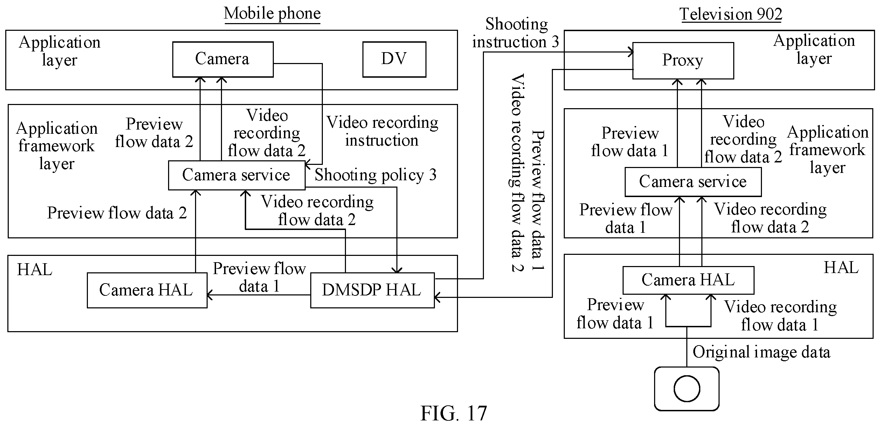

As shown in FIG. 17, after detecting an operation of tapping a video recording button 1502 by a user, a camera application of the mobile phone may send a corresponding video recording instruction to a CameraService of the mobile phone. Similar to the processes shown in FIG. 12 and FIG. 14, after receiving the video recording instruction, the CameraService of the mobile phone may allocate, to the mobile phone and the television 902 with reference to the shooting capability parameter of the television 902, an image processing task that needs to be performed during video recording, to generate a corresponding shooting policy 3.

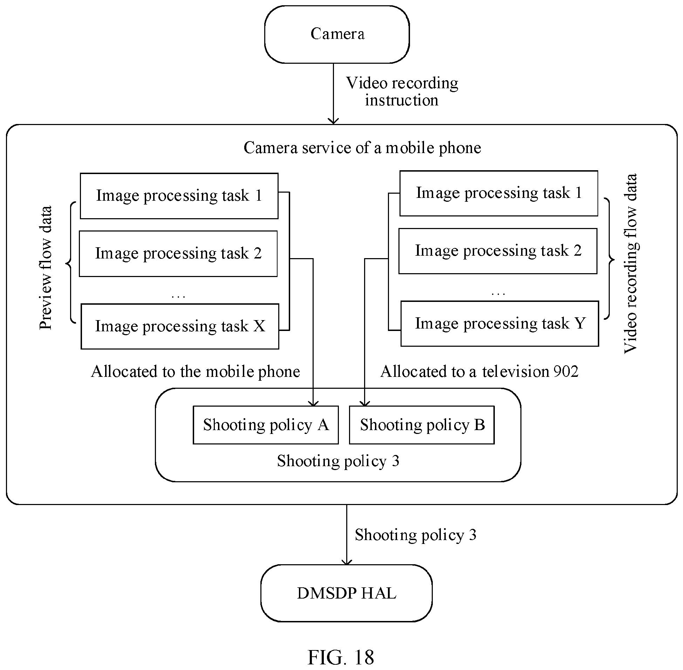

A difference is that the shooting policy 3 may include a shooting policy A for the preview flow data and a shooting policy B for the video recording flow data. As shown in FIG. 18, a shooting policy A may include X (X is an integer greater than 0) image processing tasks that need to be performed on preview flow data, and a shooting policy B may include Y (Y is an integer greater than 0) image processing tasks that need to be performed on video recording flow data. The X image processing tasks may be the same as or different from the Y image processing tasks. For example, if the user enables a beauty function when using a camera application to record a video, the shooting policy A and the shooting policy B may include an image processing task 1 of the beauty function. For another example, a CameraService of a mobile phone may additionally add an image processing task 2 recognized by AI to the shooting policy A, to present a result of AI recognition to the user in real time in a preview picture of the video recording.

Still as shown in FIG. 18, as a master device, the mobile phone is generally capable of performing each image processing task determined by the CameraService, and a processing speed and processing performance of the mobile phone are high. Therefore, the CameraService of the mobile phone may allocate the X image processing tasks in the shooting policy A to the mobile phone to be performed. In this way, during subsequent video recording, a television 902 may directly send the generated preview flow data to the mobile phone for image processing, to ensure that the preview flow data has a high requirement on real-time performance.

For video recording flow data with a low real-time requirement, if a shooting capability parameter of the television 902 indicates that the television 902 is capable of performing the Y image processing tasks, the CameraService of the mobile phone may allocate the Y image processing tasks in the shooting policy B to the television 902 to be performed. In this way, when the mobile phone performs image processing on the preview flow data, the television 902 may simultaneously perform image processing on the video recording flow data, so that shooting efficiency of the mobile phone and the television 902 during collaborative shooting is higher.

Certainly, if the Y image processing tasks include an image processing task that is not supported by the television 902, the CameraService of the mobile phone may also allocate, in the shooting policy B, the image processing task that is not supported by the television 902 to the mobile phone to be performed. This is not limited in embodiments of this application.

Still as shown in FIG. 17, the CameraService of the mobile phone may send the generated shooting policy 3 (namely, the shooting policy A and the shooting policy B) to the DMSDP HAL of the mobile phone. After receiving the shooting policy 3, the DMSDP HAL of the mobile phone may send a shooting instruction 3 to the proxy application of the television 902 based on the shooting policy 3, to indicate the television 902 to switch a shooting mode to a video recording mode. In the video recording mode, the television 902 may perform a corresponding image processing task on the video recording flow data based on the shooting policy B in the shooting policy 3, and the television 902 may directly send the preview flow data to the mobile phone without performing image processing on the preview flow data.

Still as shown in FIG. 17, after receiving the shooting instruction 3, the proxy application of the television 902 may indicate the Camera HAL of the television 902 to copy the collected original image data into two channels, where one channel is video recording flow data 1, and the other channel is preview flow data 1. In addition, the proxy application of the television 902 may deliver the shooting instruction 3 to the Camera HAL of the television 902 through the CameraService (FIG. 17 does not show a flow direction of the shooting instruction 3 inside the television 902). In this way, after obtaining the preview flow data 1, the Camera HAL of the television 902 may directly send the preview flow data 1 to the DMSDP HAL of the mobile phone through the CameraService and the proxy application of the television 902. After obtaining the video recording flow data 1, the Camera HAL of the television 902 may perform a corresponding image processing task on the video recording flow data 1 based on the shooting instruction B in the shooting instruction 3, to obtain processed video recording flow data (namely, video recording flow data 2). Further, the Camera HAL of the television 902 may send the video recording flow data 2 to the DMSDP HAL of the mobile phone through the CameraService and the proxy application of the television 902.

Still as shown in FIG. 17, after receiving the preview flow data 1 sent by the television 902, the DMSDP HAL of the mobile phone may send the preview flow data 1 to the Camera HAL of the mobile phone, and the Camera HAL of the mobile phone performs, based on the shooting policy A in the shooting policy 3, an image processing task allocated to the mobile phone, to obtain processed preview flow data (namely, preview flow data 2). The Camera HAL of the mobile phone may report the preview flow data 2 to the camera application of the mobile phone through the CameraService, and the camera application displays the preview flow data 2 in real time in the preview interface 1501 shown in FIG. 16.

In addition, after the DMSDP HAL of the mobile phone receives the video recording flow data 2 sent by the television 902, because it is set in the shooting policy 3 that the mobile phone does not need to perform image processing on the video recording flow data, the DMSDP HAL of the mobile phone may report the received video recording flow data 2 to the camera application of the mobile phone through the CameraService. After receiving the video recording flow data 2, the camera application of the mobile phone may store the video recording flow data 2 in a gallery of the mobile phone in a video format, to complete the video recording operation.

It may be learned that when the television 902 (namely, the slave device) generates a plurality of channels of image data flows in a shooting process, the mobile phone (namely, the master device) may allocate, by using a shooting capability of the slave device, image processing tasks of different image data flows to different devices for completion. In this way, the master device and the slave device may simultaneously perform image processing on the obtained image data flow in a parallel manner, so that resource utilization of each device in the distributed shooting scenario is improved, and processing efficiency of an entire shooting process is also correspondingly improved.

In addition, because the master device and the slave device may simultaneously perform image processing on the obtained image data flows, the slave device may send different image data flows to the master device in a time-division and segment-division manner. For example, when performing image processing on the video recording flow data, the slave device may send the preview flow data to the master device, and the master device performs image processing on the preview flow data. Subsequently, the slave device sends the video recording flow data after the image processing to the master device. In this way, the slave device does not need to jointly send the plurality of channels of image data flows to the master device. This reduces network bandwidth pressure during image data flow transmission, and further improves the processing efficiency of the entire shooting process.

The foregoing embodiment is described by using an example in which the slave device of the mobile phone is the television 902. It may be understood that when the slave device of the mobile phone is updated to another electronic device in the distributed shooting scenario, the mobile phone may still determine a corresponding shooting policy in real time in a shooting process by using a shooting capability of the new slave device based on the foregoing method, so that the mobile phone and the slave device may perform corresponding image processing on the collected original image data based on the shooting capability of the mobile phone and the shooting capability of the slave device. In this way, a collaborative shooting function of a plurality of devices in the distributed shooting scenario is implemented more efficiently and flexibly.

In addition, in the foregoing embodiments, an example in which the mobile phone is the master device in the distributed shooting scenario is used for description. It may be understood that the master device in the distributed shooting scenario may be an electronic device having the shooting function, such as a tablet computer or a television. This is not limited in embodiments of this application.

It should be noted that in the foregoing embodiment, a specific method for implementing a distributed shooting function between functional modules is described by using an Android system as an example. It may be understood that a corresponding functional module may also be set in another operating system (for example, a HarmonyOS system) to implement the foregoing method. All devices and function modules with functions similar to those in embodiments of this application fall within the scope of the claims of this application and equivalent technologies of this application.

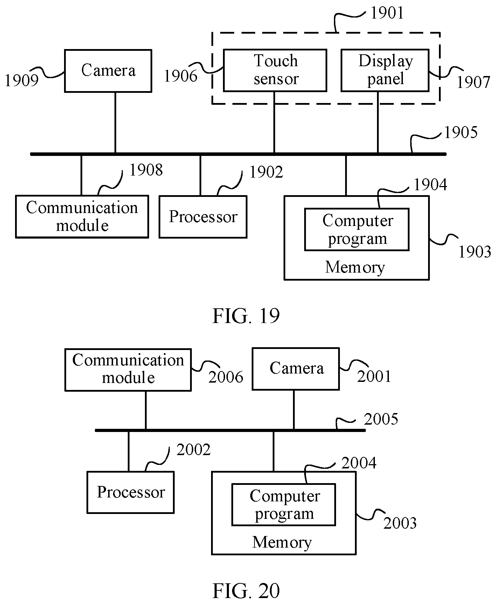

As shown in FIG. 19, embodiments of this application disclose an electronic device. The electronic device may be the foregoing master device (for example, a mobile phone). The electronic device may specifically include: a touchscreen 1901, where the touchscreen 1901 includes a touch sensor 1906 and a display 1907; one or more processors 1902; a memory 1903; a communication module 1908; one or more cameras 1909; one or more application programs (not shown); and one or more computer programs 1904. The foregoing components may be connected through one or more communication buses 1905. The one or more computer programs 1904 are stored in the memory 1903 and are configured to be executed by the one or more processors 1902. The one or more computer programs 1904 include instructions. The instructions may be used to perform the related steps performed by the master device in the foregoing embodiments.

As shown in FIG. 20, embodiments of this application disclose an electronic device. The electronic device may be the foregoing slave device (for example, a sound box). The electronic device may specifically include: one or more processors 2002; a memory 2003; a communication module 2006; one or more application programs (not shown); one or more cameras 2001; and one or more computer programs 2004. The foregoing components may be connected through one or more communication buses 2005. Certainly, a component such as a touchscreen may also be disposed in the slave device. This is not limited in embodiments of this application. The one or more computer programs 2004 are stored in the memory 2003 and are configured to be executed by the one or more processors 2002. The one or more computer programs 2004 include instructions. The instructions may be used to perform the related steps performed by the slave device in the foregoing embodiments.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

Functional units of embodiments in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of embodiments of this application, but are not intended to limit the protection scope, which is defined by the appended claims.

## Claims

1. A shooting method, comprising:
when a first device (101) performs shooting by using a camera (193, 1909, 2001) of a second device (102), obtaining, by the first device (101), a shooting capability parameter of the second device (102), wherein the shooting capability parameter indicates an image processing capability of the second device (102);
creating, by the first device (101), a hardware abstraction module at a hardware abstraction layer, HAL, of the first device (101) based on the shooting capability parameter, wherein the hardware abstraction module has the image processing capability of the second device (102);
determining, by the first device (101), a first shooting policy, wherein the first shooting policy comprises X image processing tasks that need to be performed by the first device (101) and Y image processing tasks that need to be performed by the second device (102), and both X and Y are integers greater than 0;
sending, by the first device (101), a first shooting instruction to the second device (102) based on the first shooting policy, wherein the first shooting instruction is used to trigger the second device (102) to perform the Y image processing tasks on collected original image data in response to the first shooting instruction, to obtain first image data;
receiving, by the first device (101) through the hardware abstraction module, the first image data sent by the second device (102);
performing, by the first device (101), the X image processing tasks on the first image data based on the first shooting policy, to obtain second image data; and
displaying, by the first device (101), the second image data on a display (194, 1907) interface;
wherein the determining, by the first device (101), a first shooting policy comprises:
determining, by the first device (101) in response to a current shooting mode and a shooting option selected by a user, N image processing tasks that need to be performed, wherein N=X+Y; and
allocating, by the first device (101), the N image processing tasks to the first device (101) and the second device (102), to obtain the first shooting policy.

2. The method according to claim 1,
the allocating, by the first device (101), the N image processing tasks to the first device (101) and the second device (102) comprises:
allocating, by the first device (101), the N image processing tasks to the first device (101) and the second device (102) based on the shooting capability parameter.

3. The method according to claim 2, wherein the N image processing tasks comprise a first image processing task; and
the allocating, by the first device (101), the first image processing task to the first device (101) or the second device (102) based on the shooting capability parameter comprises:
allocating, by the first device (101), the first image processing task to the second device (102) if the shooting capability parameter indicates that the second device (102) is capable of performing the first image processing task; or
allocating, by the first device (101), the first image processing task to the second device (102) if the shooting capability parameter indicates that time for the second device (102) to perform the first image processing task is shorter than time for the first device (101) to perform the first image processing task.

4. The method according to claim 1, wherein the HAL of the first device (101) further comprises a camera hardware abstraction layer , Camera HAL; and the X image processing tasks comprise X1 image processing tasks supported by the second device (102) and X2 image processing tasks supported by the first device (101), and X1+X2=X; and
the performing, by the first device (101), the X image processing tasks on the first image data based on the first shooting policy, to obtain second image data comprises:
performing, by the first device (101), the X1 image processing tasks on the first image data through the hardware abstraction module, to obtain third image data;
sending, by the hardware abstraction module, the third image data to the Camera HAL; and
performing, by the first device (101), the X2 image processing tasks on the third image data through the Camera HAL, to obtain the second image data.

5. The method according to claim 1, wherein the HAL of the first device (101) further comprises a camera hardware abstraction layer, Camera HAL; and all the X image processing tasks are image processing tasks supported by the first device (101); and
the performing, by the first device (101), the X image processing tasks on the first image data based on the first shooting policy, to obtain second image data comprises:
sending, by the hardware abstraction module of the first device (101), the first image data to the Camera HAL; and
performing, by the first device (101), the X image processing tasks on the first image data through the Camera HAL, to obtain the second image data.

6. The method according to any one of claims 1 to 5, wherein the method further comprises: after the first device (101) detects a preset operation entered by the user, updating, by the first device (101), the current shooting mode or the shooting option in response to the preset operation.

7. The method according to any one of claims 1 to 6, wherein when the first device (101) performs shooting by using the camera (193, 1909, 2001) of the second device (102), the method further comprises:
receiving, by the first device (101), a video recording operation entered by the user;
determining, by the first device (101), a second shooting policy and a third shooting policy in response to the video recording operation, wherein the second shooting policy comprises K image processing tasks that need to be performed on preview flow data, the K image processing tasks are performed by the first device (101), the third shooting policy comprises W image processing tasks that need to be performed on video recording flow data, the W image processing tasks are performed by the second device (102), and both K and W are integers greater than or equal to 0;
sending, by the first device (101), a second shooting instruction to the second device (102) based on the second shooting policy and the third shooting policy, wherein the second shooting instruction is used to trigger the second device (102) to perform the W image processing tasks on collected first video recording flow data, to obtain second video recording flow data;
after the first device (101) receives first preview flow data collected by the second device (102), performing, by the first device (101), the K image processing tasks on the first preview flow data, to obtain second preview flow data; and displaying, by the first device (101), the second preview flow data on the display (194, 1907) interface, wherein the first preview flow data and the first video recording flow data are original image data collected by the second device (102); and
after the first device (101) receives the second video recording flow data sent by the second device (102), saving, by the first device (101), the second video recording flow data as a video.

8. The method according to claim 7, wherein before the determining, by the first device (101), a second shooting policy and a third shooting policy, the method further comprises:
obtaining, by the first device (101), a shooting capability parameter of the second device (102), wherein the shooting capability parameter indicates an image processing capability of the second device (102); and
the determining, by the first device (101), a second shooting policy and a third shooting policy comprises:
determining, by the first device (101), the second shooting policy and the third shooting policy based on the shooting capability parameter.

9. The method according to any one of claims 1 to 8, wherein before the first device (101) performs shooting by using the camera (193, 1909, 2001) of the second device (102), the method further comprises:
displaying, by the first device (101), a candidate device list in response to a first operation entered by the user, wherein the candidate device list comprises the second device (102); and
indicating, by the first device (101) in response to an operation of selecting the second device (102) from the candidate device list by the user, the second device (102) to enable the camera (193, 1909, 2001) to start collecting the original image data.

10. An electronic device, wherein the electronic device is a first device (101), and the first device (101) comprises:
a display (194, 1907);
one or more processors (110, 1902, 2002);
a memory (121, 1903, 2003); and
a communication module (160, 1908, 2006), wherein
the memory (121, 1903, 2003) stores one or more computer programs, and the one or more computer programs comprise instructions; and when the instructions are executed by the electronic device, the electronic device is enabled to perform the shooting method performed by the first device (101) according to any one of claims 1 to 9.

11. A computer-readable storage medium, wherein the computer-readable storage medium stores instructions; and when the instructions are run on an electronic device, the electronic device is enabled to perform the shooting method according to any one of claims 1 to 9.

12. A computer program product comprising instructions, wherein when the computer program product is run on an electronic device, the electronic device is enabled to perform the shooting method according to any one of claims 1 to 9.

## Patentansprüche

1. Aufnahmeverfahren, das Folgendes umfasst:
wenn eine erste Vorrichtung (101) eine Aufnahme unter Verwendung einer Kamera (193, 1909, 2001) einer zweiten Vorrichtung (102) durchführt, Erhalten, durch die erste Vorrichtung (101), eines Aufnahmefähigkeitsparameters der zweiten Vorrichtung (102), wobei der Aufnahmefähigkeitsparameter eine Bildverarbeitungsfähigkeit der zweiten Vorrichtung (102) angibt;
Erzeugen, durch die erste Vorrichtung (101), eines Hardware-Abstraktionsmoduls auf einer Hardware-Abstraktionsschicht (HAL) der ersten Vorrichtung (101) basierend auf dem Aufnahmefähigkeitsparameter, wobei das Hardware-Abstraktionsmodul die Bildverarbeitungsfähigkeit der zweiten Vorrichtung (102) aufweist;
Bestimmen, durch die erste Vorrichtung (101), einer ersten Aufnahmerichtlinie, wobei die erste Aufnahmerichtlinie X Bildverarbeitungsaufgaben, die durch die erste Vorrichtung (101) durchgeführt werden müssen, und Y Bildverarbeitungsaufgaben, die durch die zweite Vorrichtung (102) durchgeführt werden müssen, umfasst und sowohl X als auch Y ganze Zahlen größer als 0 sind;
Senden, durch die erste Vorrichtung (101), einer ersten Aufnahmeanweisung an die zweite Vorrichtung (102) basierend auf der ersten Aufnahmerichtlinie, wobei die erste Aufnahmeanweisung verwendet wird, um die zweite Vorrichtung (102) zu veranlassen, die Y Bildverarbeitungsaufgaben an gesammelten Originalbilddaten als Reaktion auf die erste Aufnahmeanweisung durchzuführen, um erste Bilddaten zu erhalten;
Empfangen, durch die erste Vorrichtung (101) über das Hardware-Abstraktionsmodul, der ersten Bilddaten, die durch die zweite Vorrichtung (102) gesendet werden;
Durchführen, durch die erste Vorrichtung (101), der X Bildverarbeitungsaufgaben an den ersten Bilddaten basierend auf der ersten Aufnahmerichtlinie, um zweite Bilddaten zu erhalten; und
Anzeigen, durch die erste Vorrichtung (101), der zweiten Bilddaten auf einer Anzeige (194, 1907)-Schnittstelle;
wobei das Bestimmen, durch die erste Vorrichtung (101), einer ersten Aufnahmerichtlinie Folgendes umfasst:
Bestimmen, durch die erste Vorrichtung (101) als Reaktion auf einen aktuellen Aufnahmemodus und eine Aufnahmeoption, die durch einen Benutzer ausgewählt wird, von N Bildverarbeitungsaufgaben, die durchgeführt werden müssen, wobei N=X+Y; und
Zuweisen, durch die erste Vorrichtung (101), der N Bildverarbeitungsaufgaben zu der ersten Vorrichtung (101) und der zweiten Vorrichtung (102), um die erste Aufnahmerichtlinie zu erhalten.

2. Verfahren nach Anspruch 1,
wobei das Zuweisen, durch die erste Vorrichtung (101), der N Bildverarbeitungsaufgaben zu der ersten Vorrichtung (101) und der zweiten Vorrichtung (102) Folgendes umfasst:
Zuweisen, durch die erste Vorrichtung (101), der N Bildverarbeitungsaufgaben zu der ersten Vorrichtung (101) und der zweiten Vorrichtung (102) basierend auf dem Aufnahmefähigkeitsparameter.

3. Verfahren nach Anspruch 2, wobei die N Bildverarbeitungsaufgaben eine erste Bildverarbeitungsaufgabe umfassen; und
wobei das Zuweisen, durch die erste Vorrichtung (101), der ersten Bildverarbeitungsaufgabe zu der ersten Vorrichtung (101) oder der zweiten Vorrichtung (102) basierend auf dem Aufnahmefähigkeitsparameter Folgendes umfasst:
Zuweisen, durch die erste Vorrichtung (101), der ersten Bildverarbeitungsaufgabe zu der zweiten Vorrichtung (102), falls der Aufnahmefähigkeitsparameter angibt, dass die zweite Vorrichtung (102) in der Lage ist, die erste Bildverarbeitungsaufgabe durchzuführen; oder
Zuweisen, durch die erste Vorrichtung (101), der ersten Bildverarbeitungsaufgabe zu der zweiten Vorrichtung (102), falls der Aufnahmefähigkeitsparameter angibt, dass die Zeit für die zweite Vorrichtung (102) zum Durchführen der ersten Bildverarbeitungsaufgabe kürzer ist als die Zeit für die erste Vorrichtung (101) zum Durchführen der ersten Bildverarbeitungsaufgabe.

4. Verfahren nach Anspruch 1, wobei die HAL der ersten Vorrichtung (101) ferner eine Kamera-Hardware-Abstraktionsschicht (Kamera-HAL) umfasst; und die X Bildverarbeitungsaufgaben X1 Bildverarbeitungsaufgaben, die von der zweiten Vorrichtung (102) unterstützt werden, und X2 Bildverarbeitungsaufgaben, die von der ersten Vorrichtung (101) unterstützt werden, umfassen, und X1+X2=X; und
wobei das Durchführen, durch die erste Vorrichtung (101), der X Bildverarbeitungsaufgaben an den ersten Bilddaten basierend auf der ersten Aufnahmerichtlinie, um zweite Bilddaten zu erhalten, Folgendes umfasst:
Durchführen, durch die erste Vorrichtung (101), der X1 Bildverarbeitungsaufgaben an den ersten Bilddaten durch das Hardware-Abstraktionsmodul, um dritte Bilddaten zu erhalten;
Senden, durch das Hardware-Abstraktionsmodul, der dritten Bilddaten an die Kamera-HAL; und
Durchführen, durch die erste Vorrichtung (101), der X2 Bildverarbeitungsaufgaben an den dritten Bilddaten durch die Kamera-HAL, um die zweiten Bilddaten zu erhalten.

5. Verfahren nach Anspruch 1, wobei die HAL der ersten Vorrichtung (101) ferner eine Kamera-Hardware-Abstraktionsschicht (Kamera-HAL), umfasst; und alle X Bildverarbeitungsaufgaben Bildverarbeitungsaufgaben sind, die durch die erste Vorrichtung (101) unterstützt werden; und
wobei das Durchführen, durch die erste Vorrichtung (101), der X Bildverarbeitungsaufgaben an den ersten Bilddaten basierend auf der ersten Aufnahmerichtlinie, um zweite Bilddaten zu erhalten, Folgendes umfasst:
Senden, durch das Hardware-Abstraktionsmodul der ersten Vorrichtung (101), der ersten Bilddaten an die Kamera-HAL; und
Durchführen, durch die erste Vorrichtung (101), der X Bildverarbeitungsaufgaben an den ersten Bilddaten durch die Kamera-HAL, um die zweiten Bilddaten zu erhalten.

6. Verfahren nach einem der Ansprüche 1 bis 5, wobei das Verfahren ferner Folgendes umfasst: Nachdem die erste Vorrichtung (101) eine durch den Benutzer eingegebene voreingestellte Operation detektiert, Aktualisieren, durch die erste Vorrichtung (101), des aktuellen Aufnahmemodus oder der Aufnahmeoption als Reaktion auf die voreingestellte Operation.

7. Verfahren nach einem der Ansprüche 1 bis 6, wobei, wenn die erste Vorrichtung (101) Aufnahmen unter Verwendung der Kamera (193, 1909, 2001) der zweiten Vorrichtung (102) durchführt, das Verfahren ferner Folgendes umfasst:
Empfangen, durch die erste Vorrichtung (101), einer Videoaufzeichnungsoperation, die durch den Benutzer eingegeben wird;
Bestimmen, durch die erste Vorrichtung (101), einer zweiten Aufnahmerichtlinie und einer dritten Aufnahmerichtlinie als Reaktion auf die Videoaufzeichnungsoperation, wobei die zweite Aufnahmerichtlinie K Bildverarbeitungsaufgaben umfasst, die an Vorschauflussdaten durchgeführt werden müssen, die K Bildverarbeitungsaufgaben durch die erste Vorrichtung (101) durchgeführt werden, die dritte Aufnahmerichtlinie W Bildverarbeitungsaufgaben umfasst, die an Videoaufzeichnungsflussdaten durchgeführt werden müssen, die W Bildverarbeitungsaufgaben durch die zweite Vorrichtung (102) durchgeführt werden und sowohl K als auch W ganze Zahlen größer oder gleich 0 sind;
Senden, durch die erste Vorrichtung (101), einer zweiten Aufnahmeanweisung an die zweite Vorrichtung (102) basierend auf der zweiten Aufnahmerichtlinie und der dritten Aufnahmerichtlinie, wobei die zweite Aufnahmeanweisung verwendet wird, um die zweite Vorrichtung (102) zu veranlassen, die W Bildverarbeitungsaufgaben an gesammelten ersten Videoaufzeichnungsflussdaten durchzuführen, um zweite Videoaufzeichnungsflussdaten zu erhalten;
nachdem die erste Vorrichtung (101) erste Vorschauflussdaten empfängt, die durch die zweite Vorrichtung (102) gesammelt werden, Durchführen, durch die erste Vorrichtung (101), der K Bildverarbeitungsaufgaben an den ersten Vorschauflussdaten, um zweite Vorschauflussdaten zu erhalten; und Anzeigen, durch die erste Vorrichtung (101), der zweiten Vorschauflussdaten auf der Anzeige (194, 1907)-Schnittstelle, wobei die ersten Vorschauflussdaten und die ersten Videoaufzeichnungsflussdaten durch die zweite Vorrichtung (102) gesammelt werden; und
nachdem die erste Vorrichtung (101) die zweiten Videoaufzeichnungsflussdaten empfängt, die durch die zweite Vorrichtung (102) gesendet werden, Speichern, durch die erste Vorrichtung (101), der zweiten Videoaufzeichnungsflussdaten als ein Video.

8. Verfahren nach Anspruch 7, wobei das Verfahren vor dem Bestimmen, durch die erste Vorrichtung (101), einer zweiten Aufnahmerichtlinie und einer dritten Aufnahmerichtlinie ferner Folgendes umfasst:
Erhalten, durch die erste Vorrichtung (101), eines Aufnahmefähigkeitsparameters der zweiten Vorrichtung (102), wobei der Aufnahmefähigkeitsparameter eine Bildverarbeitungsfähigkeit der zweiten Vorrichtung (102) angibt; und
wobei das Bestimmen, durch die erste Vorrichtung (101), einer zweiten Aufnahmerichtlinie und einer dritten Aufnahmerichtlinie Folgendes umfasst:
Bestimmen, durch die erste Vorrichtung (101), der zweiten Aufnahmerichtlinie und der dritten Aufnahmerichtlinie basierend auf dem Aufnahmefähigkeitsparameter.

9. Verfahren nach einem der Ansprüche 1 bis 8, wobei, bevor die erste Vorrichtung (101) Aufnahmen unter Verwendung der Kamera (193, 1909, 2001) der zweiten Vorrichtung (102) durchführt, das Verfahren ferner Folgendes umfasst:
Anzeigen, durch die erste Vorrichtung (101), einer Kandidatenvorrichtungsliste als Reaktion auf eine erste Operation, die durch den Benutzer eingegeben wird, wobei die Kandidatenvorrichtungsliste die zweite Vorrichtung (102) umfasst; und
Anzeigen, durch die erste Vorrichtung (101) als Reaktion auf eine Operation des Auswählens der zweiten Vorrichtung (102) aus der Kandidatenvorrichtungsliste durch den Benutzer, der zweiten Vorrichtung (102), um die Kamera (193, 1909, 2001) in die Lage zu versetzen, mit dem Sammeln der ursprünglichen Bilddaten zu beginnen.

10. Elektronische Vorrichtung, wobei die elektronische Vorrichtung eine erste Vorrichtung (101) ist und die erste Vorrichtung (101) Folgendes umfasst:
eine Anzeige (194, 1907);
einen oder mehrere Prozessoren (110, 1902, 2002);
einen Speicher (121, 1903, 2003); und
ein Kommunikationsmodul (160, 1908, 2006), wobei
der Speicher (121, 1903, 2003) ein oder mehrere Computerprogramme speichert, und das eine oder die mehreren Computerprogramme Anweisungen umfassen; und wenn die Anweisungen durch die elektronische Vorrichtung ausgeführt werden, die elektronische Vorrichtung in der Lage ist, das durch die erste Vorrichtung (101) durchgeführte Aufnahmeverfahren nach einem der Ansprüche 1 bis 9 durchzuführen.

11. Computerlesbares Speichermedium, wobei das computerlesbare Speichermedium Anweisungen speichert; und wenn die Anweisungen auf einer elektronischen Vorrichtung ausgeführt werden, die elektronische Vorrichtung in die Lage versetzt wird, das Aufnahmeverfahren nach einem der Ansprüche 1 bis 9 durchzuführen.

12. Computerprogrammprodukt, das Anweisungen umfasst, wobei, wenn das Computerprogrammprodukt auf einer elektronischen Vorrichtung ausgeführt wird, die elektronische Vorrichtung in die Lage versetzt wird, das Aufnahmeverfahren nach einem der Ansprüche 1 bis 9 durchzuführen.

## Revendications

1. Procédé de prise de vue, comprenant :
lorsqu'un premier dispositif (101) réalise une prise de vue en utilisant une caméra (193, 1909, 2001) d'un second dispositif (102), l'obtention, par le premier dispositif (101), d'un paramètre de capacité de prise de vue du second dispositif (102), dans lequel le paramètre de capacité de prise de vue indique une capacité de traitement d'image du second dispositif (102) ;
la création, par le premier dispositif (101), d'un module d'abstraction de matériel au niveau d'une couche d'abstraction de matériel (Hardware Abstraction Layer, HAL), du premier dispositif (101) sur la base du paramètre de capacité de prise de vue, dans lequel le module d'abstraction de matériel a la capacité de traitement d'image du second dispositif (102) ;
la détermination, par le premier dispositif (101), d'une première politique de prise de vue, dans lequel la première politique de prise de vue comprend X tâches de traitement d'image qui doivent être réalisées par le premier dispositif (101) et Y tâches de traitement d'image qui doivent être réalisées par le second dispositif (102), et X et Y tous les deux sont des nombres entiers supérieurs à 0 ;
l'envoi, par le premier dispositif (101), d'une première instruction de prise de vue au second dispositif (102) sur la base de la première politique de prise de vue, dans lequel la première instruction de prise de vue est utilisée pour déclencher le second dispositif (102) pour réaliser les Y tâches de traitement d'image sur des données d'image collectées d'origine en réponse à la première instruction de prise de vue, pour obtenir des premières données d'image ;
la réception, par le premier dispositif (101), par le biais du module d'abstraction de matériel, des premières données d'image envoyées par le second dispositif (102) ;
la réalisation, par le premier dispositif (101), des X tâches de traitement d'image sur les premières données d'image sur la base de la première politique de prise de vue, pour obtenir des deuxièmes données d'image ; et
l'affichage, par le premier dispositif (101), des deuxièmes données d'image sur une interface d'affichage (194, 1907) ;
dans lequel la détermination, par le premier dispositif (101), d'une première politique de prise de vue comprend :
la détermination, par le premier dispositif (101), en réponse à un mode de prise de vue actuel et à une option de prise de vue sélectionnée par un utilisateur, de N tâches de traitement d'image qui doivent être réalisées, dans lequel N=X+Y ; et
l'attribution, par le premier dispositif (101), des N tâches de traitement d'image au premier dispositif (101) et au second dispositif (102), pour obtenir la première politique de prise de vue.

2. Procédé selon la revendication 1,
l'attribution, par le premier dispositif (101), des N tâches de traitement d'image au premier dispositif (101) et au second dispositif (102) comprend :
l'attribution, par le premier dispositif (101), des N tâches de traitement d'image au premier dispositif (101) et au second dispositif (102) sur la base du paramètre de capacité de prise de vue.

3. Procédé selon la revendication 2, dans lequel les N tâches de traitement d'image comprennent une première tâche de traitement d'image ; et
l'attribution, par le premier dispositif (101), de la première tâche de traitement d'image au premier dispositif (101) ou au second dispositif (102) sur la base du paramètre de capacité de prise de vue comprend :
l'attribution, par le premier dispositif (101), de la première tâche de traitement d'image au second dispositif (102) si le paramètre de capacité de prise de vue indique que le second dispositif (102) est capable de réaliser la première tâche de traitement d'image ; ou
l'attribution, par le premier dispositif (101), de la première tâche de traitement d'image au second dispositif (102) si le paramètre de capacité de prise de vue indique qu'un temps pour que le second dispositif (102) réalise la première tâche de traitement d'image est plus court qu'un temps pour que le premier dispositif (101) réalise la première tâche de traitement d'image.

4. Procédé selon la revendication 1, dans lequel la HAL du premier dispositif (101) comprend en outre une couche d'abstraction de matériel de caméra (HAL de caméra) ; et les X tâches de traitement d'image comprennent X1 tâches de traitement d'image prise en charge par le second dispositif (102) et X2 tâches de traitement d'image prise en charge par le premier dispositif (101), et X1+X2=X ; et
la réalisation, par le premier dispositif (101), des X tâches de traitement d'image sur les premières données d'image sur la base de la première politique de prise de vue, pour obtenir des deuxièmes données d'image comprend :
la réalisation, par le premier dispositif (101), des X1 tâches de traitement d'image sur les premières données d'image par le biais du module d'abstraction de matériel, pour obtenir des troisièmes données d'image ;
l'envoi, par le module d'abstraction de matériel, des troisièmes données d'image à la HAL de caméra ; et
la réalisation, par le premier dispositif (101), des X2 tâches de traitement d'image sur les troisièmes données d'image par le biais de la HAL de caméra, pour obtenir les deuxièmes données d'image.

5. Procédé selon la revendication 1, dans lequel la HAL du premier dispositif (101) comprend en outre une couche d'abstraction de matériel de caméra (HAL de caméra) ; et toutes les X tâches de traitement d'image sont des tâches de traitement d'image prises en charge par le premier dispositif (101) ; et
la réalisation, par le premier dispositif (101), des X tâches de traitement d'image sur les premières données d'image sur la base de la première politique de prise de vue, pour obtenir des deuxièmes données d'image comprend :
l'envoi, par le module d'abstraction de matériel du premier dispositif (101), des premières données d'image à la HAL de caméra ; et
la réalisation, par le premier dispositif (101), des X tâches de traitement d'image sur les premières données d'image par le biais de la HAL de caméra, pour obtenir les deuxièmes données d'image.

6. Procédé selon l'une quelconque des revendications 1 à 5, dans lequel le procédé comprend en outre : après que le premier dispositif (101) détecte une opération prédéfinie entrée par l'utilisateur, la mise à jour, par le premier dispositif (101), du mode de prise de vue actuel ou de l'option de prise de vue en réponse à l'opération prédéfinie.

7. Procédé selon l'une quelconque des revendications 1 à 6, dans lequel, lorsque le premier dispositif (101) réalise une prise de vue en utilisant la caméra (193, 1909, 2001) du second dispositif (102), le procédé comprend en outre :
la réception, par le premier dispositif (101), d'une opération d'enregistrement de vidéo entrée par l'utilisateur ;
la détermination, par le premier dispositif (101), d'une deuxième politique de prise de vue et d'une troisième politique de prise de vue en réponse à l'opération d'enregistrement de vidéo, dans lequel la deuxième politique de prise de vue comprend K tâches de traitement d'image qui doivent être réalisées sur des données de flux de prévisualisation, les K tâches de traitement d'image sont réalisées par le premier dispositif (101), la troisième politique de prise de vue comprend W tâches de traitement d'image qui doivent être réalisées sur des données de flux d'enregistrement de vidéo, les W tâches de traitement d'image sont réalisées par le second dispositif (102), et K et W sont tous les deux des nombres entier supérieurs ou égaux à 0 ;
l'envoi, par le premier dispositif (101), d'une seconde instruction de prise de vue au second dispositif (102) sur la base de la deuxième politique de prise de vue et de la troisième politique de prise de vue, dans lequel la seconde instruction de prise de vue est utilisée pour déclencher le second dispositif (102) pour réaliser les W tâches de traitement d'image sur des premières données de flux d'enregistrement de vidéo collectées, pour obtenir des secondes données de flux d'enregistrement de vidéo ;
après que le premier dispositif (101) reçoit des premières données de flux de prévisualisation collectées par le second dispositif (102), la réalisation, par le premier dispositif (101), des K tâches de traitement d'image sur les premières données de flux de prévisualisation, pour obtenir des secondes données de flux de prévisualisation ; et l'affichage, par le premier dispositif (101), des secondes données de flux de prévisualisation sur l'interface d'affichage (194, 1907), dans lequel les premières données de flux de prévisualisation et les premières données de flux d'enregistrement de vidéo sont des données d'image d'origine collectées par le second dispositif (102) ; et
après que le premier dispositif (101) reçoit les secondes données de flux d'enregistrement de vidéo envoyées par le second dispositif (102), la sauvegarde, par le premier dispositif (101), des secondes données de flux d'enregistrement de vidéo sous forme de vidéo.

8. Procédé selon la revendication 7, dans lequel, avant la détermination, par le premier dispositif (101), d'une deuxième politique de prise de vue et d'une troisième politique de prise de vue, le procédé comprend en outre :
l'obtention, par le premier dispositif (101), d'un paramètre de capacité de prise de vue du second dispositif (102), dans lequel le paramètre de capacité de prise de vue indique une capacité de traitement d'image du second dispositif (102) ; et
la détermination, par le premier dispositif (101), d'une deuxième politique de prise de vue et d'une troisième politique de prise de vue comprend :
la détermination, par le premier dispositif (101), de la deuxième politique de prise de vue et de la troisième politique de prise de vue sur la base du paramètre de capacité de prise de vue.

9. Procédé selon l'une quelconque des revendications 1 à 8, dans lequel, avant que le premier dispositif (101) ne réalise une prise de vue en utilisant la caméra (193, 1909, 2001) du second dispositif (102), le procédé comprend en outre :
l'affichage, par le premier dispositif (101), d'une liste de dispositifs candidats en réponse à une première opération entrée par l'utilisateur, dans lequel la liste de dispositifs candidats comprend le second dispositif (102) ; et
l'indication, par le premier dispositif (101), en réponse à une opération de sélection du second dispositif (102) parmi la liste de dispositifs candidats par l'utilisateur, au second dispositif (102) d'activer la caméra (193, 1909, 2001) pour commencer à collecter les données d'image d'origine.

10. Dispositif électronique, dans lequel le dispositif électronique est un premier dispositif (101), et le premier dispositif (101) comprend :
un écran d'affichage (194, 1907) ;
un ou plusieurs processeurs (110, 1902, 2002) ;
une mémoire (121, 1903, 2003) ; et
un module de communication (160, 1908, 2006), dans lequel
la mémoire (121, 1903, 2003) stocke un ou plusieurs programmes d'ordinateur, et l'un ou les plusieurs programmes d'ordinateur comprennent des instructions ; et, lorsque les instructions sont exécutées par le dispositif électronique, le dispositif électronique est en mesure de réaliser le procédé de prise de vue réalisé par le premier dispositif (101) selon l'une quelconque des revendications 1 à 9.

11. Support lisible par ordinateur, dans lequel le support lisible par ordinateur stocke des instructions ; et, lorsque les instructions sont exploitées sur un dispositif électronique, le dispositif électronique est en mesure de réaliser le procédé de prise de vue selon l'une quelconque des revendications 1 à 9.

12. Produit programme d'ordinateur comprenant des instructions, dans lequel, lorsque le produit programme d'ordinateur est exploité sur un dispositif électronique, le dispositif électronique est en mesure de réaliser le procédé de prise de vue selon l'une quelconque des revendications 1 à 9.
